(19) Europäisches Patentamt / European Patent Office / Office européen des brevets

(11) **EP 3 029 900 B1**

(12) **EUROPEAN PATENT SPECIFICATION**

(45) Date of publication and mention
of the grant of the patent:
**22.08.2018 Bulletin 2018/34**

(51) Int Cl.:
*H04L 25/03* <sup>(2006.01)</sup>　　*H04L 1/00* <sup>(2006.01)</sup>
*H04B 17/00* <sup>(2015.01)</sup>　*H01Q 1/24* <sup>(2006.01)</sup>
*H01Q 3/26* <sup>(2006.01)</sup>　　*H01Q 21/06* <sup>(2006.01)</sup>
*H01Q 21/24* <sup>(2006.01)</sup>　*H01Q 21/26* <sup>(2006.01)</sup>
*H01Q 25/00* <sup>(2006.01)</sup>　*H04B 7/04* <sup>(2017.01)</sup>
*H04B 7/06* <sup>(2006.01)</sup>　　*H04B 7/08* <sup>(2006.01)</sup>
*H04L 25/02* <sup>(2006.01)</sup>　*H04L 27/26* <sup>(2006.01)</sup>
*H04W 88/08* <sup>(2009.01)</sup>　*H04B 17/12* <sup>(2015.01)</sup>

(21) Application number: **14839494.3**

(22) Date of filing: **07.01.2014**

(86) International application number:
**PCT/CN2014/070226**

(87) International publication number:
**WO 2015/027675 (05.03.2015 Gazette 2015/09)**

(54) **COMMUNICATION DEVICE, BASEBAND UNIT AND COMMUNICATION METHOD**

KOMMUNIKATIONSVORRICHTUNG, BASISBANDEINHEIT UND
KOMMUNIKATIONSVERFAHREN

DISPOSITIF DE COMMUNICATIONS, UNITÉ EN BANDE DE BASE ET PROCÉDÉ DE
COMMUNICATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2013 CN 201310392709**

(43) Date of publication of application:
**08.06.2016 Bulletin 2016/23**

(73) Proprietor: **Huawei Technologies Co., Ltd.
Longgang District
Shenzhen, Guangdong 518129 (CN)**

(72) Inventors:
• **HUANG, Hui
Shenzhen
Guangdong 518129 (CN)**
• **ZHANG, Pengcheng
Shenzhen
Guangdong 518129 (CN)**
• **FANG, Dongmei
Shenzhen
Guangdong 518129 (CN)**

(74) Representative: **Gill Jennings & Every LLP
The Broadgate Tower
20 Primrose Street
London EC2A 2ES (GB)**

(56) References cited:
**WO-A1-2010/142321　　CN-A- 1 283 901
CN-A- 101 080 031　　CN-A- 102 404 033
CN-A- 103 475 609　　CN-U- 201 797 604
US-A1- 2007 205 955**

**Description**

**TECHNICAL FIELD**

The present invention relates to the field of communications, and in particular, to a communications device, a baseband unit, and a communication method.

**BACKGROUND**

In a Long Term Evolution (Long Term Evolution, LTE) system, a base station with dual-columns cross polarization antennas generally includes a baseband unit and an intermediate frequency/radio frequency (IF/RF) unit. The IF/RF unit may be connected to the dual-columns cross polarization antennas through cables (Cables). The baseband unit may generate a baseband signal, and then send the baseband signal to the IF/RF unit; and the IF/RF unit may convert the baseband signal into a radio frequency signal, and then send the radio frequency signal to a user equipment (User Equipment, UE) through the dual-columns cross polarization antennas. However, because there exists a difference, for example, between transmit channels in the IF/RF unit, and between cables connecting the IF/RF unit and the dual-columns cross polarization antennas, phases between various channels of transmit signals cannot be controlled accurately.

US 2007/0205955 relates to multiple-element antenna array for communication network.

**SUMMARY**

Embodiments of the present invention provide a communications device, a baseband unit, and a communication method, so as to solve a problem of not being able to accurately control phases of various channels of transmit signals.

Embodiments of the invention provide a baseband unit, a communications device and a communication method according to claims 1, 11 and 13 respectively. Further embodiments of the invention are defined in the respective dependent claims.

In the embodiments of the present invention, a cable compensation phase is determined according to an uplink sounding signal from a UE, and 4 channels of baseband signals are corrected according to compensation coefficients of 4 transmit channels and the cable compensation phase, so that phases of various channels of transmit signals can be controlled accurately.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of a communication method according to an embodiment of the present invention;
FIG. 2 is a schematic diagram of a scenario to which an embodiment of the present invention may be applied;
FIG. 3 is a schematic diagram of logical port mapping according to an embodiment of the present invention;
FIG. 4 is a schematic diagram of logical port mapping according to another embodiment of the present invention;
FIG. 5 is a schematic block diagram of a baseband unit according to an embodiment of the present invention;
FIG. 6 is a schematic block diagram of a baseband unit according to another embodiment of the present invention; and
FIG. 7 is a schematic block diagram of a communications device according to an embodiment of the present invention.

**DESCRIPTION OF EMBODIMENTS**

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

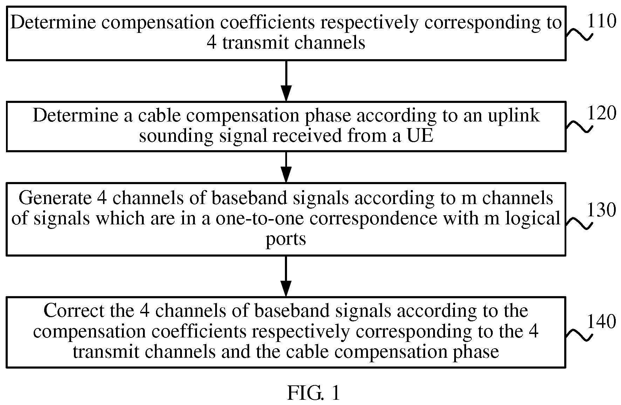

FIG. 1 is a schematic flowchart of a communication method according to an embodiment of the present invention. The method of FIG. 1 is executed by a baseband unit in a base station. For example, the method may be executed by a baseband unit in a base station such as a distributed base station, a macro base station, or a small-cell base station.

110: Determine compensation coefficients respectively corresponding to 4 transmit channels.

120: Determine a cable compensation phase according to a received uplink sounding (Sounding) signal of a user equipment (User Equipment, UE), where the cable compensation phase is a difference between a cable phase difference corresponding to a first group of co-polarized antennas and a cable phase difference corresponding to a second group of co-polarized antennas.

130: Generate 4 channels of baseband signals according to m channels of signals which are in a one-to-one correspondence with m logical ports.

140: Correct the 4 channels of baseband signals according to the compensation coefficients respectively corresponding to the 4 transmit channels and the cable compensation phase, so as to send the 4 channels of corrected baseband signals to the UE through the 4 transmit channels and dual-columns cross polarization antennas.

The base station may include the baseband unit, an IF/RF unit, and the dual-columns cross polarization antennas. The baseband unit may be connected to the IF/RF unit through an optical fiber, the IF/RF unit may be connected to the dual-columns cross polarization antennas through cables, the IF/RF unit may include the 4 transmit channels, the dual-columns cross polarization antennas may include the first group of co-polarized antennas and the second group of co-polarized antennas, and the base station may work in a mode in which there are m logical ports, where m is a positive integer. It should be understood that, in base stations of different types, the IF/RF unit may be named differently, for example, for a distributed base station, the IF/RF unit is referred to as a radio remote unit (Radio Remote Unit, RRU). This embodiment of the present invention sets no limitation thereto.

In this embodiment of the present invention, the dual-columns cross polarization antennas may include 4 columns of polarized antennas, that is, a first column of positive 45-degree polarized antenna, a first column of negative 45-degree polarized antenna, a second column of positive 45-degree polarized antenna, and a second column of negative 45-degree polarized antenna. Therefore, the first group of co-polarized antennas may include the first column of positive 45-degree polarized antenna and the second column of positive 45-degree polarized antenna, and the second group of co-polarized antennas may include the first column of negative 45-degree polarized antenna and the second column of negative 45-degree polarized antenna. As can be seen, the first group of co-polarized antennas may also be referred to as a first pair of co-polarized antennas, and the second group of co-polarized antennas may also be referred to as a second pair of co-polarized antennas.

The IF/RF unit may be provided with 4 antenna interfaces, and each antenna interface is connected to a column of antenna in the dual-columns cross polarization antennas through 1 cable. Therefore, each column of antenna corresponds to 1 cable.

The cable phase difference between the first group of co-polarized antennas may be a phase difference between cables corresponding to two columns of antennas in the first group of co-polarized antennas, for example, the cable phase difference between the first group of co-polarized antennas may be a phase difference between a cable connected to the first column of positive 45-degree polarized antenna and a cable connected to the second column of positive 45-degree polarized antenna.

The cable phase difference between the second group of co-polarized antennas may be a phase difference between cables corresponding to two columns of antennas in the second group of co-polarized antennas, for example, the cable phase difference between the second group of co-polarized antennas may be a phase difference between a cable connected to the first column of negative 45-degree polarized antenna and a cable connected to the second column of negative 45-degree polarized antenna. The cable compensation phase is a difference between the cable phase difference between the first group of co-polarized antennas and the cable phase difference between the second group of co-polarized antennas, and therefore, the cable compensation phase may be used for compensating for the difference between the cable phase differences corresponding to the two groups of co-polarized antennas.

Because there exists a difference between cables connecting antenna interfaces to the dual-columns cross polarization antennas, a phase difference exists between the cables. Specifically, cable phase differences corresponding to various groups of co-polarized antennas are inconsistent. In the prior-art correction scheme, a baseband unit corrects a transmit signal by merely using a compensation coefficient of a transmit channel, that is, corrects only a transmit channel in an IF/RF unit, without considering a phase difference between cables. However, due to such a phase difference, a phase of a transmit signal cannot be controlled accurately, which reduces a downlink throughput. In this embodiment of the present invention, when a signal is sent, the difference between the cable phase differences corresponding to various groups of co-polarized antennas is fully considered. Specifically, the baseband unit may determine the cable compensation phase according to the uplink sounding signal from the UE. Then, the baseband unit may correct the 4 channels of generated baseband signals according to the compensation coefficients of the 4 transmit channels and the cable compensation phase, so that phases of various channels of signals can be controlled accurately, and a system downlink throughput can also be improved.

In this embodiment of the present invention, a cable compensation phase is determined according to an uplink sounding signal from a UE, and 4 channels of baseband signals are corrected according to compensation coefficients of 4 transmit channels and the cable compensation phase, so that phases of various channels of transmit signals can be controlled accurately.

In addition, the downlink throughput can be improved because the phases of various channels of transmit signals can be controlled accurately.

It should be understood that, this embodiment of the present invention not only may be applied to a system with one group of dual-columns cross polarization antennas, but also may be applied to a system with multiple groups of dual-columns cross polarization antennas. For example, 8-columns cross polarization antennas may be considered as two groups of dual-columns cross polarization antennas. For each group of dual-columns cross polarization antennas, a process of step 110 to step 140 may be executed.

Optionally, as an embodiment, in step 110, the compensation coefficients of the 4 transmit channels may be determined according to the prior-art correction scheme. For example, for a distributed base station, a BBU may send a transmit correction reference signal on each transmit channel, and the transmit correction reference signal is returned to the BBU after passing through the transmit channel, a correction coupling circuit, and a correction receive channel. The BBU may calculate an amplitude and/or phase difference between the signal returned by each transmit channel and the transmit correction reference signal, and use the amplitude and/or phase difference as a compensation coefficient of each transmit channel. A compensation coefficient of a transmit channel may be used for correcting an amplitude and/or phase of the transmit channel.

In addition, a compensation coefficient of each receive channel may be further calculated, for example, for a distributed base station, a BBU may send a receive correction reference signal on a correction transmit channel, and the receive correction reference signal is returned to the BBU after passing through the correction transmit channel, a correction coupling circuit, and a receive channel. The BBU may calculate an amplitude and/or phase difference between the signal returned by each receive channel and the receive correction reference signal, and use the amplitude and/or phase difference as a compensation coefficient of each receive channel. A compensation coefficient of a receive channel may be used for correcting a signal received by the base station from a UE. For example, the foregoing uplink sounding signal from the UE may be obtained by the base station through correction using a compensation coefficient of a receive channel after the base station receives an uplink sounding signal sent by the UE. A compensation coefficient of a receive channel may be used for correcting an amplitude and/or phase of the receive channel.

Optionally, as another embodiment, in step 120, channel responses between the UE and the base station may be determined according to the uplink sounding signal received from the UE. It may be determined, according to the channel responses between the UE and the base station, that channels between the UE and the dual-columns cross polarization antennas are line of sight (Line of sight, LOS) paths. The cable compensation phase may be determined according to the channel responses between the UE and the base station.

In this embodiment of the present invention, the channels between the UE and the dual-columns cross polarization antennas may refer to channels between a transmit antenna of the UE and the dual-columns cross polarization antennas of the base station. Channels between the UE and the base station refer to channels between the transmit antenna of the UE and the baseband unit of the base station. Therefore, the channels between the UE and the base station may include the channels between the transmit antenna of the UE and the dual-columns cross polarization antennas of the base station, cables, and receive channels in the IF/RF unit.

For the dual-columns cross polarization antennas, 4 channels may exist between the transmit antenna of the UE and the baseband unit of the base station, and correspondingly, 4 channels may also exist between the transmit antenna of the UE and the dual-columns cross polarization antennas. Each channel between the transmit antenna of the UE and the baseband unit of the base station may include a channel between the transmit antenna of the UE and 1 column of polarized antenna, the column of polarized antenna, a cable between the column of polarized antenna and an antenna interface of the base station, and a receive channel in the base station. Therefore, the channels between the UE and the dual-columns cross polarization antennas are in a one-to-one correspondence with the channels between the UE and the baseband unit.

Because the method is executed by the baseband unit, the channel responses between the UE and the base station which are determined according to the uplink sounding signal from the UE may refer to channel responses between the UE and the baseband unit. For example, for a distributed base station with dual-columns cross polarization antennas, channel responses between a UE and the base station which are determined according to an uplink sounding signal from the UE may refer to channel responses between a transmit antenna of the UE and a BBU.

An LOS path refers to a path on which no obstacle exists between two communication parties. For the dual-columns cross polarization antennas, if the channels between the UE and the dual-columns cross polarization antennas are LOS paths, a phase difference between two channels between one group of co-polarized antennas and the UE is the same as a phase difference between two channels between another group of co-polarized antennas and the UE. In addition, after the baseband unit corrects the receive channels, responses of the receive channels are consistent, that is, no phase difference exists.

Therefore, the channel responses between the transmit antenna of the UE and the baseband unit of the base station may be determined according to the uplink sounding signal received from the UE. In this way, if the channels between the UE and the dual-columns cross polarization antennas are LOS paths, the cable compensation phase may be determined according to the channel responses between the UE and the base station, that is, the channel responses between the UE and the baseband unit. For a process of determining the channel responses, reference may be made to the prior-art process, and details are not described herein again.

Optionally, as another embodiment, in step 120, a full-band spatial correlation matrix may be determined according to the channel responses between the UE and the base station. Then, it may be determined, according to the full-band spatial correlation matrix, that the channels between the UE and the dual-columns cross polarization antennas are LOS paths.

Specifically, the full-band spatial correlation matrix may be determined according to response results of the channels between the UE and the base station. Each element in the full-band spatial correlation matrix may represent a correlation between each two of the channels between the UE and the base station. Therefore, it may be determined, according to the full-band spatial correlation matrix, whether the channels between the UE and the dual-columns cross polarization antennas are LOS paths.

Optionally, as another embodiment, in step 120, the first group of co-polarized antennas may include a first antenna and a third antenna, the second group of co-polarized antennas may include a second antenna and a fourth antenna, the channels between the UE and the base station may include a first channel, a second channel, a third channel, and a fourth channel, the first antenna corresponds to the first channel, the second antenna corresponds to the second channel, the third antenna corresponds to the third channel, and the fourth antenna corresponds to the fourth channel.

It may be determined, if a correlation between the first channel and the third channel is greater than a preset threshold, and a correlation between the second channel and the fourth channel is greater than the threshold, that the channels between the UE and the dual-columns cross polarization antennas are LOS paths.

For example, the first antenna may refer to the first column of positive 45-degree antenna, the second antenna may refer to the first column of negative 45-degree antenna, the third antenna may refer to the second column of positive 45-degree antenna, and the fourth antenna may refer to the second column of negative 45-degree antenna. As described above, the channels between the UE and the base station are in a one-to-one correspondence with the dual-columns cross polarization antennas. Therefore, the channels between the UE and the base station may include 4 channels, which are referred to as the first channel, the second channel, the third channel, and the fourth channel in the embodiment of the present invention.

If the channels between the UE and the dual-columns cross polarization antennas are LOS paths, channel responses between a group of co-polarized antennas and the transmit antenna of the UE have a same amplitude across the whole band, and differ by only one phase. Therefore, there is a high correlation between two channels between the co-polarized antennas and the transmit antenna of the UE. If the channels between the UE and the dual-columns cross polarization antennas are not LOS paths, channel responses between a group of co-polarized antennas and the transmit antenna of the UE differ on each subcarrier, there is a low correlation between two channels between the co-polarized antennas and the transmit antenna of the UE.

Each element in the full-band spatial correlation matrix may represent a correlation between each two of the channels between the UE and the base station. The responses of the receive channels are the same, and the difference between cable phase differences corresponding to the two groups of co-polarized antennas causes a fixed phase difference between channels across the whole band, but does not affect an amplitude value of a channel correlation. Therefore, the LOS paths may be determined according to the full-band spatial correlation matrix by using an amplitude of a correlation between channels corresponding to the first group of co-polarized antennas and an amplitude of a correlation between channels corresponding to the second group of co-polarized antennas in the channels between the UE and the base station. That is, the LOS paths may be determined by using an amplitude of the correlation between the first channel and the third channel and an amplitude of the correlation between the second channel and the fourth channel. Specifically, it may be determined whether the correlation between the first channel and the third channel is greater than a threshold, and whether the correlation between the second channel and the fourth channel is also greater than the threshold. If the two correlations are both greater than the threshold, it indicates that the channels between the UE and the dual-columns cross polarization antennas are LOS paths. The threshold may be preset, and its value range may be 0 to 1, for example, the threshold may be set to 0.8 or 0.9.

Optionally, as another embodiment, in step 120, if the channels between the UE and the dual-columns cross polarization antennas are LOS paths, a difference value between a first phase and a second phase may be determined according to the full-band spatial correlation matrix, where the first phase is a phase difference between the first channel and the third channel, and the second phase is a phase difference between the second channel and the fourth channel. The difference value between the first phase and the second phase may be filtered, to obtain the cable compensation phase.

For the dual-columns cross polarization antennas, if the channels between the UE and the dual-columns cross polarization antennas are LOS paths, a phase difference between two channels between the first group of co-polarized antennas and the UE is the same as a phase difference between two channels between the second group of co-polarized antennas and the UE. Specifically, assuming that a phase difference between a channel which is between the first antenna and the UE and a channel which is between the third antenna and the UE is A, and a phase difference between a channel which is between the second antenna and the UE and a channel which is between the fourth antenna and the UE is B. If the channels between the UE and the dual-columns cross polarization antennas are LOS paths, A is the same as B. Because the responses of the receive channels are the same, the phase difference between the first channel and the third channel and the phase difference between the second channel and the fourth channel may be determined, and the difference value between the first phase and the second phase may be calculated. To reduce an error, the difference value may be filtered, to obtain a final cable compensation phase.

It should be understood that, because an uplink sounding signal from the UE is received continually, each time an uplink sounding signal from the UE is received, one cable compensation phase may be calculated. Therefore, the uplink sounding signal received from the UE may be understood as an uplink sounding signal currently received from the UE, and the cable compensation phase may be understood as a current cable compensation phase. If it is determined, according to a currently received sounding signal of the UE, that the channels between the UE and the dual-columns cross polarization antennas are not LOS paths, a cable compensation phase obtained when a previous uplink sounding signal from the UE is received may be used as a current cable compensation phase, that is, the cable compensation phase remains unchanged. It should be noted that, if it is determined, according to the uplink sounding signal received from the UE for a first time, that the channels between the UE and the dual-columns cross polarization antennas are not LOS paths, the cable compensation phase may be considered as 0 by default.

How to determine the cable compensation phase is described in the following by using an example in which the uplink sounding signal from the UE is received for a $p^{th}$ time.

Optionally, as another embodiment, when the uplink sounding signal from the UE is received for the $p^{th}$ time,

$$\text{the full-band spatial correlation matrix } R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

where an element $r_{ij}(p)$ in $R(p)$ represents a correlation between an $i^{th}$ channel and a $j^{th}$ channel between the UE and the baseband unit when the uplink sounding signal from the UE is received for the $p^{th}$ time, and p is a positive integer.

If the following inequations (1) and (2) are both true, it may be determined that the channels between the UE and the dual-columns cross polarization antennas when the uplink sounding signal from the UE is received for the $p^{th}$ time are LOS paths:

$$\left| r_{02}(p) \right| / \sqrt{r_{00}(p)r_{22}(p)} > Thre \qquad (1)$$

$$\left| r_{13}(p) \right| / \sqrt{r_{11}(p)r_{33}(p)} > Thre \qquad (2)$$

where Thre represents the threshold. The threshold may be preset. For example, *Thre* may be set to 0.8 or 0.9.

Optionally, as another embodiment, a difference value $\Delta(p)$ between the first phase and the second phase when the uplink sounding signal from the UE is received for the $p^{th}$ time may be determined according to equation (3):

$$\Delta(p) = phase(r_{20}(p)) - phase(r_{31}(p)) \qquad (3)$$

where $phase(r_{20}(p))$ may represent the first phase, and $phase(r_{31}(p))$ may represent the second phase.

Two cases may exist in a process of filtering $\Delta(p)$:

When p is greater than 1, the difference value between the first phase and the second phase when the uplink sounding signal from the UE is received for the $p^{th}$ time may be filtered according to equation (4), to obtain a cable compensation phase $\hat{\Delta}(p)$ when the uplink sounding signal from the UE is received for the $p^{th}$ time:

$$\hat{\Delta}(p) = (1-\alpha)*\hat{\Delta}(p-1) + \alpha*\Delta(p) \qquad (4)$$

where $\hat{\Delta}(p\text{-}1)$ represents a cable compensation phase when the uplink sounding signal from the UE is received for a (p-1)$^{\text{th}}$ time, and $\alpha$ represents a filtering coefficient, and generally $0<\alpha<1$.

When p is 1, a cable compensation phase $\hat{\Delta}(1)$ when the uplink sounding signal from the UE is received for a first time may be obtained according to equation (5):

$$\hat{\Delta}(1) = \Delta(1) \qquad\qquad (5)$$

In this embodiment of the present invention, a symbol "^" in an equation may represent an estimated value.

As can be seen, in this embodiment of the present invention, each time an uplink sounding signal from the UE is received, one process to calculate a cable compensation phase may be executed, and the obtained cable compensation phase is used as a basis for correcting a phase of a current baseband signal, thereby implementing real-time correction of baseband signals, and reducing an error.

Optionally, as another embodiment, when p is greater than 1, if inequation (1) or inequation (2) is false, it may be determined that the channels between the UE and the dual-columns cross polarization antennas when the uplink sounding signal from the UE is received for the p$^{\text{th}}$ time are not LOS paths. Correspondingly, the cable compensation phase when the uplink sounding signal from the UE is received for the p$^{\text{th}}$ time is $\hat{\Delta}(p)=\hat{\Delta}(p\text{-}1)$. Specifically, if the channels between the UE and the dual-columns cross polarization antennas are not LOS paths when the uplink sounding signal from the UE is received for the p$^{\text{th}}$ time, the cable compensation phase obtained when a previous uplink sounding signal from the UE is received may be used to correct a phase of a current baseband signal. When p is 1, if it is determined, according to the uplink sounding signal from the UE received for a first time, that the channels between the UE and the dual-columns cross polarization antennas are not LOS paths, the cable compensation phase may be considered as 0 by default.

The foregoing describes in detail the process of determining a cable compensation phase. After obtaining the cable compensation phase, the base station may execute a mapping operation between a logical port and a physical antenna. That is, 4 channels of baseband signals may be generated according to signals which are in a one-to-one correspondence with the m logical ports.

Optionally, as another embodiment, in step 130, m may be 2, that is to say, the base station may work in a mode in which there are 2 logical ports. The 4 channels of baseband signals may be generated according to equation (6):

$$\begin{bmatrix} x_0(k) \\ x_1(k) \\ x_2(k) \\ x_3(k) \end{bmatrix} = \begin{bmatrix} 1 & 0 \\ e^{j2\pi dk/N_{fft}} & 0 \\ 0 & 1 \\ 0 & -e^{j2\pi dk/N_{fft}} \end{bmatrix} \begin{bmatrix} s_0(k) \\ s_1(k) \end{bmatrix} \qquad\qquad (6)$$

where k represents a subcarrier index, $x_0(k)$, $x_1(k)$, $x_2(k)$, and $x_3(k)$ represent 4 channels of baseband signals on a k$^{\text{th}}$ subcarrier, $s_0(k)$ and $s_1(k)$ represent signals respectively corresponding to 2 logical ports on the k$^{\text{th}}$ subcarrier, d represents the number of cyclic delay points, $N_{fft}$ represents the number of system fast Fourier transformation FFT points, and k is a positive integer. $x_0(k)$ and $x_2(k)$ respectively correspond to the first group of co-polarized antennas, and $x_1(k)$ and $x_3(k)$ respectively correspond to the second group of co-polarized antennas.

As can be seen, in this embodiment, signals of the two logical ports are complementary, so that the total amount of energy at signals of the two logical ports received by the UE is a fixed constant, thereby avoiding channel frequency domain fluctuation, improving the downlink throughput, and improving a diversity gain.

Optionally, as another embodiment, in step 130, m may be 4. A first channel of baseband signal may be generated according to a signal corresponding to a first logical port, a second channel of baseband signal may be generated according to a signal corresponding to a third logical port, a third channel of baseband signal may be generated according to a signal corresponding to a second logical port, and a fourth channel of baseband signal may be generated according to a signal corresponding to a fourth logical port.

Specifically, when the base station works in a mode in which there are 4 logical ports, a signal of the first port may be mapped to a first transmit channel, a signal of the third port may be mapped to a second transmit channel, a signal of the second port may be mapped to a third transmit channel, and a signal of the fourth port may be mapped to a fourth transmit channel. In a closed-loop MIMO system, for most codewords, a weighted phase difference between the first 2 logical ports is the same as a weighted phase difference between the second 2 logical ports. In this way, MIMO channel responses between the base station and the UE match better with a closed-loop MIMO codebook, thereby improving the downlink throughput.

Optionally, as another embodiment, in step 130, m may be 4. The 4 channels of baseband signals may be generated according to equation (7):

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix} \qquad (7)$$

where k represents a subcarrier index, $x_0(k)$, $x_1(k)$, $x_2(k)$, and $x_3(k)$ represent 4 channels of baseband signals on a $k^{th}$ subcarrier, $s_0(k)$, $s_1(k)$, $s_2(k)$, and $s_3(k)$ represent signals respectively corresponding to 4 logical ports on the $k^{th}$ subcarrier, and k is a positive integer; and $x_0(k)$ and $x_2(k)$ respectively correspond to the first group of co-polarized antennas, and $x_1(k)$ and $x_3(k)$ respectively correspond to the second group of co-polarized antennas.

Optionally, as another embodiment, in step 140, the 4 channels of baseband signals may be respectively multiplied by compensation coefficients of transmit channels corresponding to the 4 channels of baseband signals, among which 1 channel of baseband signal may be further multiplied by a cable compensation phase, to obtain a corrected signal.

Optionally, as another embodiment, after the 4 channels of corrected baseband signals are obtained, one channel of corrected baseband signal may be sent to the UE through each transmit channel and a corresponding column of polarized antenna. For example, through the first transmit channel and the first column of positive 45-degree polarized antenna, a first channel of corrected baseband signal may be sent to the UE; through the second transmit channel and the first column of negative 45-degree polarized antenna, a second channel of corrected baseband signal may be sent to the UE; and so on.

The following describes in detail the embodiments of the present invention with reference to a specific example. It should be noted that, the following example is merely intended to help a person skilled in the art to better understand the embodiments of the present invention, but not to limit the scope of the embodiments of the present invention.

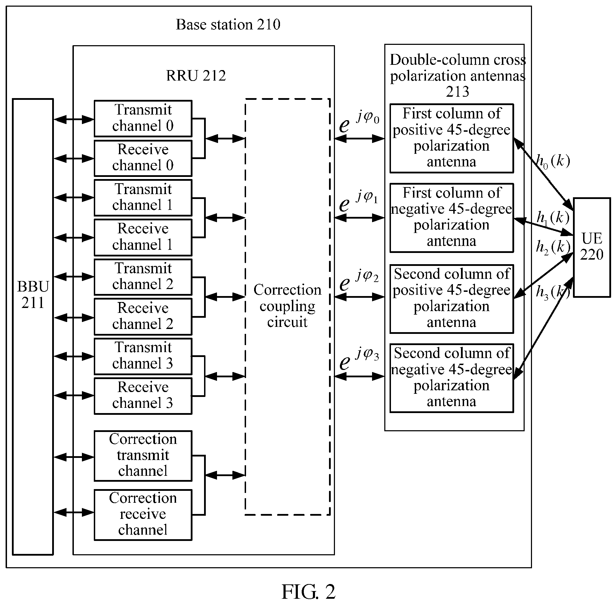

FIG. 2 is a schematic diagram of a scenario to which an embodiment of the present invention may be applied.

In the scenario shown in FIG. 2, a base station 210 may be a distributed base station, and communication can be performed between the base station 210 and a UE 220.

The base station 210 may include a BBU 211, an RRU 212, and dual-columns cross polarization antennas 213. The BBU 211 may be connected to the RRU 212 through an optical fiber, the RRU 212 has 4 antenna interfaces (not shown in FIG. 2), and the antenna interfaces may be respectively connected to the dual-columns cross polarization antennas 213 through 4 cables.

The RRU 212 may include transmit channel 0 to transmit channel 3, receive channel 0 to receive channel 3, a correction transmit channel, a correction receive channel, and a correction coupling circuit. The dual-columns cross polarization antennas 213 may include a first column of positive 45-degree polarized antenna, a first column of negative 45-degree polarized antenna, a second column of positive 45-degree polarized antenna, and a second column of negative 45-degree polarized antenna.

As can be seen, a one-to-one correspondence exists between the transmit channels, the receive channels, the cables, and the polarized antennas.

The following describes in detail a process of signal transmission between the base station 210 and the UE 220 based on the scenario shown in FIG. 2.

Step 1: The BBU 211 calculates compensation coefficients of the transmit channels and receive channels in the RRU 212.

Specifically, the BBU 211 may send a transmit correction reference signal to each of transmit channels 0 to 3, and the transmit correction reference signal is returned to the BBU 211 through the correction coupling circuit and the correction receive channel. The BBU 211 calculates an amplitude and phase difference between each feedback signal and the transmit correction reference signal, and uses the calculated amplitude and phase difference as a compensation coefficient of a corresponding transmit channel.

The BBU 211 may send a receive correction reference signal to a correction transmit channel, and the receive correction reference signal is returned to the BBU 211 through the correction coupling circuit and each of the receive channels 0 to 3. The BBU 211 calculates an amplitude and phase difference between each feedback signal and the receive correction reference signal, and uses the calculated amplitude and phase difference as a compensation coefficient of a corresponding receive channel.

The compensation coefficients of the transmit channels are used for making responses of the transmit channels consistent, that is, $T_0=T_1=T_2=T_3$, where $T_0$, $T_1$, $T_2$, and $T_3$ respectively represent response features of transmit channels 0 to 3.

The compensation coefficients of the receive channels are used for making responses of the receive channels consistent, that is, $R_0 = R_1 = R_2 = R_3$, where $R_0$, $R_1$, $R_2$, and $R_3$ respectively represent response features of receive channels 0 to 3.

Step 2: The BBU 211 calculates a cable compensation phase.

In FIG. 2, $e^{j\varphi_0}$, $e^{j\varphi_1}$, $e^{j\varphi_2}$, and $e^{j\varphi_3}$ may be respectively used to represent response features of cables between the RRU 212 and the first column of positive 45-degree polarized antenna, between the RRU 212 and the first column of negative 45-degree polarized antenna, between the RRU 212 and the second column of positive 45-degree polarized antenna, and between the RRU 212 and the second column of negative 45-degree polarized antenna.

$h_0(k)$, $h_1(k)$, $h_2(k)$, and $h_3(k)$ may be respectively used to represent channel responses between the dual-columns cross polarization antennas 213 and a transmit antenna of the UE 220 on a $k^{th}$ subcarrier, where K is a positive integer. Each time the BBU 211 receives an uplink sounding signal from the UE 220, the BBU 211 calculates one cable compensation phase. The following description is made by using an example in which the BBU 211 receives the uplink sounding signal from the UE 220 for a $p^{th}$ time, where p is a positive integer.

A) The BBU 211 calculates channel responses between the transmit antenna of the UE 220 and the BBU 211.

4 channels exist between the transmit antenna of the UE 220 and the BBU 211. Each channel between the transmit antenna of the UE 220 and the BBU 211 includes a channel between the UE 220 and a column of polarized antenna, a cable between the column of polarized antenna and the RRU 212, and a corresponding receive channel. For example, channel 0 between the transmit antenna of the UE 220 and the BBU 211 may include a channel between the UE 220 and the first column of positive 45-degree polarized antenna, a cable between the first column of positive 45-degree polarized antenna and the RRU 212, and receive channel 0.

The BBU 211 may determine, according to the uplink sounding signal received for the $p^{th}$ time, a channel response $\hat{h}_{i,p}(k)$ of an $i^{th}$ channel between the transmit antenna of the UE 220 and the BBU 211 on the $k^{th}$ subcarrier. When receiving an uplink sounding signal, the BBU 211 first compensates for the uplink sounding signal by using a compensation coefficient of a receive channel calculated in step 1, and then determines the channel response $\hat{h}_{i,p}(k)$ of the $i^{th}$ channel between the transmit antenna of the UE 220 and the BBU 211 on the $k^{th}$ subcarrier by using the compensated uplink sounding signal.

Because each channel between the transmit antenna of the UE 220 and the BBU 211 may include a receive channel, a cable, and a channel between the dual-columns cross polarization antennas and the UE, a relationship between the channel response $\hat{h}_{i,p}(k)$ of the $i^{th}$ channel between the transmit antenna of the UE 220 and the BBU 211, and a response feature of an $i^{th}$ receive channel, and a relationship between a response feature of an $i^{th}$ cable and a response feature of an $i^{th}$ channel between the transmit antenna of the UE 220 and the dual-columns cross polarization antennas 213 may be represented by using equation (8):

$$\hat{h}_{i,p}(k) \approx R_{i,p} h_{i,p}(k) e_p^{j\varphi_i} \tag{8}$$

where, i is 0, 1, 2, or 3.

Herein, $R_{i,p}$ is a response feature of the $i^{th}$ receive channel obtained after correction is performed according to a compensation coefficient of the $i^{th}$ receive channel. Based on the description of step 1, after the receive channels are corrected by using the compensation coefficients of the receive channels, the response features of the receive channels are the same.

B) The BBU 211 may calculate a full-band spatial correlation matrix R according to equation (9) and the channel responses of the channels between the transmit antenna of the UE 220 and the BBU 211:

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix} = \frac{1}{K}\sum_{k=0}^{K-1} \begin{bmatrix} \hat{h}_{0p}(k) \\ \hat{h}_{1p}(k) \\ \hat{h}_{2p}(k) \\ \hat{h}_{3p}(k) \end{bmatrix} \begin{bmatrix} \hat{h}_{0p}^*(k) & \hat{h}_{1p}^*(k) & \hat{h}_{2p}^*(k) & \hat{h}_{3p}^*(k) \end{bmatrix}$$

$$\tag{9}$$

where, K represents the number of subcarriers in a signal bandwidth, for example, K=1200 for an LTE system with a bandwidth of 20 MHz.

C) The BBU 211 may determine whether the foregoing two inequations (1) and (2) are true.

D) If it is determined that inequations (1) and (2) are both true, the BBU 211 determines that the channels between the UE 220 and the dual-columns cross polarization antennas of the base station 210 are LOS paths.

If the channels between the UE and the dual-columns cross polarization antennas are LOS paths, a phase difference between two channels between the first group of co-polarized antennas and the UE is the same as a phase difference between two channels between the second group of co-polarized antennas and the UE, that is, equation (10) is satisfied:

$$phase(h_0(k)h_2^*(k)) = phase(h_1(k)h_3^*(k)) \qquad (10)$$

Therefore, by using this feature, the BBU 211 may calculate, according to equation (11), a difference value $\Delta(p)$ between a first phase and a second phase when the uplink sounding signal from the UE 220 is received for the $p^{th}$ time. The first phase may be a phase difference between channel 0 which is between the transmit antenna of the UE 220 and the BBU 211 and channel 2 which is between the transmit antenna of the UE 220 and the BBU 211. The second phase may be a phase difference between channel 1 which is between the transmit antenna of the UE 220 and the BBU 211 and channel 3 which is between the transmit antenna of the UE 220 and the BBU 211.

$$\Delta(p) = (\varphi_2 - \varphi_0) - (\varphi_3 - \varphi_1) = phase(r_{20}(p)) - phase(r_{31}(p)) \qquad (11)$$

Then, the difference value obtained by using equation (11) is filtered according to equation (4), to obtain a final cable compensation phase $\hat{\Delta}(p)$. Actually, the result obtained according to equation (11) is a cable compensation phase not filtered.

Step 3: The BBU 211 generates 4 channels of baseband signals according to signals which are in a one-to-one correspondence with logical ports.

Specifically, in this step, the BBU 211 executes a mapping operation between the logical ports and the transmit channels.

A) Assuming that the base station 210 works in a mode in which there are 2 logical ports, the BBU 211 may map the 2 logical ports to the 4 transmit channels.

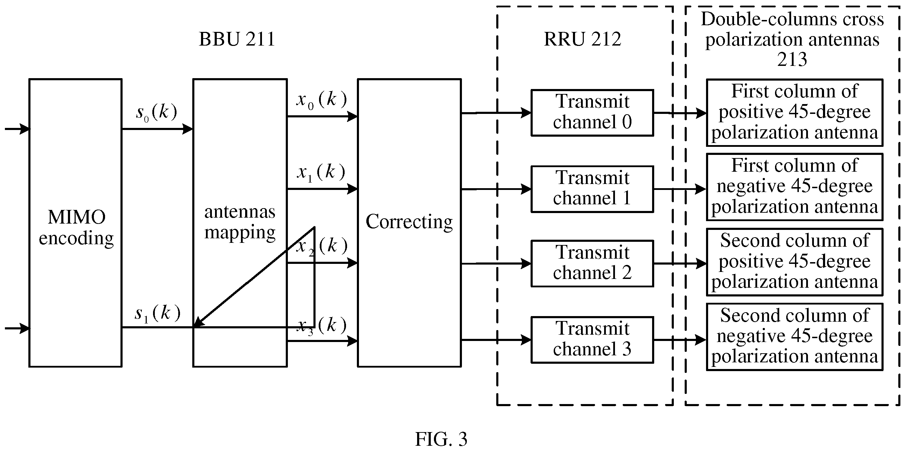

FIG. 3 is a schematic diagram of logical port mapping according to an embodiment of the present invention. As shown in FIG. 3, the BBU 211 may perform MIMO encoding on signals which are in a one-to-one correspondence with the logical ports, and then generate 4 channels of baseband signals $x_0(k)$, $x_1(k)$, $x_2(k)$, and $x_3(k)$ according to equation (6) and signals $s_0(k)$ and $s_1(k)$ obtained by means of the MIMO encoding.

As can be seen, the signals of the two ports are complementary, so that the total amount of energy at signals of the two ports received by the UE is a fixed constant, thereby avoiding channel frequency domain fluctuation, and improving downlink throughput.

B) Assuming that the base station 210 works in a mode in which there are 4 logical ports, the BBU 211 may map the 4 logical ports to the 4 transmit channels.

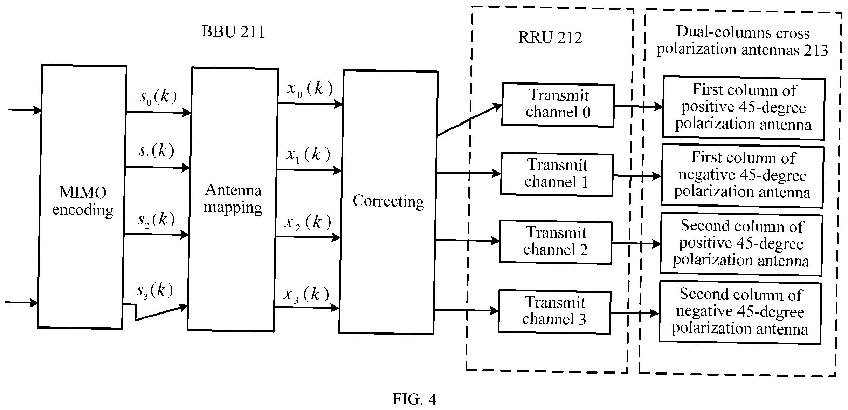

FIG. 4 is a schematic diagram of logical port mapping according to another embodiment of the present invention. As shown in FIG. 4, the BBU 211 may perform MIMO encoding on signals which are in a one-to-one correspondence with the logical ports, and then generate 4 channels of baseband signals $x_0(k)$, $x_1(k)$, $x_2(k)$, and $x_3(k)$ according to equation (7) and signals $s_0(k)$, $s_1(k)$, $s_2(k)$, and $s_3(k)$ obtained by means of the MIMO encoding.

In this case, logical port 0 is mapped to transmit channel 0, logical port 2 is mapped to transmit channel 1, logical port 1 is mapped to transmit channel 2, and logical port 3 is mapped to transmit channel 3.

Table 1 is a closed-loop codebook specified by the 3<sup>rd</sup> Generation Partnership Project (3<sup>rd</sup> Generation Partnership Project, 3GPP) protocol (36.211). A 4-port closed-loop codebook has 16 codewords in total, where the first 12 codewords have a common feature. As shown in Table 1, the common feature is: A weighted phase difference between port 0 and port 1 is the same as a weighted phase difference between port 2 and port 3.

**Table 1 Closed-loop codebook**

| Code index (Code Index) | Port 0 (Port 0) | Port 1 (Port 1) | Port 2 (Port 2) | Port 3 (Port 3) |
| --- | --- | --- | --- | --- |
| 0 | 1 | 1 | 1 | 1 |

(continued)

| Code index (Code Index) | Port 0 (Port 0) | Port 1 (Port 1) | Port 2 (Port 2) | Port 3 (Port 3) |
|---|---|---|---|---|
| 1 | 1 | i | -1 | -i |
| 2 | 1 | -1 | 1 | -1 |
| 3 | 1 | -i | -1 | i |
| 4 | 1 | 0.707+0.707i | i | -0.707+0.707i |
| 5 | 1 | -0.707+0.707i | -i | 0.707+0.707i |
| 6 | 1 | -0.707-0.707i | i | 0.707-0.707i |
| 7 | 1 | 0.707-0.707i | -i | -0.707-0.707i |
| 8 | 1 | 1 | -1 | -1 |
| 9 | 1 | i | 1 | i |
| 10 | 1 | -1 | -1 | 1 |
| 11 | 1 | -i | 1 | -i |
| 12 | 1 | 1 | 1 | -1 |
| 13 | 1 | 1 | -1 | 1 |
| 14 | 1 | -1 | 1 | 1 |
| 15 | 1 | -1 | -1 | -1 |

As can be seen, by using the foregoing mapping scheme, the channel responses between the base station and the UE are consistent with the features of the closed-loop MIMO codebook, thereby achieving bettering matching between the channel responses between the base station and the UE and the closed-loop MIMO codebook, and improving the closed-loop MIMO performance.

Step 4: The BBU 211 corrects the 4 channels of baseband signals $x_0(k)$, $x_1(k)$, $x_2(k)$, and $x_3(k)$ according to the compensation coefficients of the transmit channels obtained in step 1 and the cable compensation phase obtained in step 2.

Specifically, the BBU 211 respectively multiplies $x_0(k)$, $x_1(k)$, $x_2(k)$, and $x_3(k)$ by compensation coefficients of corresponding transmit channels, for example, multiplies $x_0(k)$ by the compensation coefficient of transmit channel 0, multiplies $x_1(k)$ by the compensation coefficient of transmit channel 1, and so on, to respectively obtain signals $x'_0(k)$, $x'_1(k)$, $x'_2(k)$, and $x'_3(k)$.

Then, the BBU 211 may compensate for a cable phase of the signal $x'_3(k)$, that is, multiply $x'_3(k)$ by $e^{j\hat{\Delta}(p)}$ to obtain $x''_3(k)$.

As shown in FIG. 3 or FIG. 4, after the 4 channels of baseband signals are obtained according to the signals corresponding to the logical ports, the obtained 4 channels of baseband signals are corrected.

Step 5: The BBU 211 sends the 4 channels of corrected baseband signals to the UE 220 through corresponding transmit channels and polarized antennas.

Specifically, the BBU 211 may send the signal $x'_0(k)$ to the UE 220 through transmit channel 0 and the first column of positive 45-degree polarized antenna, send the signal $x'_1(k)$ to the UE 220 through transmit channel 1 and the first column of negative 45-degree polarized antenna, send the signal $x'_2(k)$ to the UE 220 through transmit channel 2 and the second column of positive 45-degree polarized antenna, and send the signal $x''_3(k)$ to the UE 220 through transmit channel 3 and the second column of negative 45-degree polarized antenna.

In this embodiment of the present invention, a base station determines a cable compensation phase according to an uplink sounding signal from a UE, and corrects 4 channels of baseband signals according to compensation coefficients of 4 transmit channels and the cable compensation phase, so that phases of various channels of transmit signals can be controlled accurately.

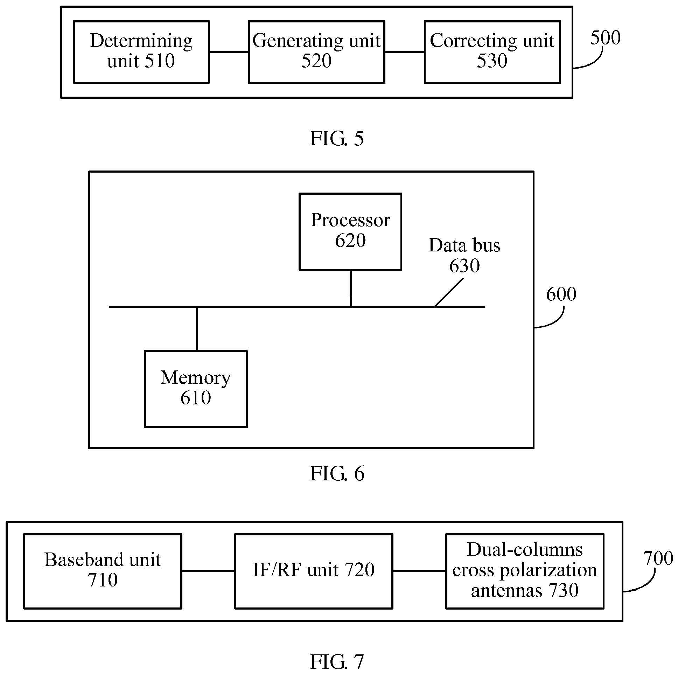

FIG. 5 is a schematic block diagram of a baseband unit according to an embodiment of the present invention. The baseband unit 500 in FIG. 5 includes a determining unit 510, a generating unit 520, and a correcting unit 530.

The determining unit 510 determines compensation coefficients respectively corresponding to 4 transmit channels. The determining unit 510 further determines a cable compensation phase according to an uplink sounding signal received from a UE, where dual-columns cross polarization antennas of a base station to which the baseband unit 500 belongs include a first group of co-polarized antennas and a second group of co-polarized antennas, and the cable compensation phase is a difference between a cable phase difference corresponding to the first group of co-polarized antennas and a cable phase difference corresponding to the second group of co-polarized antennas. The generating unit 520 generates 4 channels of baseband signals according to m channels of signals which are in a one-to-one correspondence with m logical ports, where m is a positive integer. The correcting unit 530 corrects the 4 channels of baseband signals according to the compensation coefficients respectively corresponding to the 4 transmit channels and the cable compensation phase, so as to send the 4 channels of corrected baseband signals to the UE through the 4 transmit channels and the dual-columns cross polarization antennas.

In this embodiment of the present invention, a cable compensation phase is determined according to an uplink sounding signal from a UE, and 4 channels of baseband signals are corrected according to compensation coefficients of 4 transmit channels and the cable compensation phase, so that phases of various channels of transmit signals can be controlled accurately.

Optionally, as an embodiment, the determining unit 510 may determine channel responses between the UE and the baseband unit 500 according to the uplink sounding signal received from the UE. The determining unit 510 may determine, according to the channel responses between the UE and the baseband unit 500, that channels between the UE and the dual-columns cross polarization antennas are LOS paths. The determining unit 510 determines a cable compensation phase according to the channel responses between the UE and the baseband unit 500.

Optionally, as another embodiment, the determining unit 510 may determine a full-band spatial correlation matrix according to the channel responses between the UE and baseband unit 500. The determining unit 510 may determine, according to the full-band spatial correlation matrix, that the channels between the UE and the dual-columns cross polarization antennas are LOS paths.

Optionally, as another embodiment, the first group of co-polarized antennas includes a first antenna and a third antenna, the second group of co-polarized antennas includes a second antenna and a fourth antenna, channels between the UE and the baseband unit include a first channel, a second channel, a third channel, and a fourth channel, the first antenna corresponds to the first channel, the second antenna corresponds to the second channel, the third antenna corresponds to the third channel, and the fourth antenna corresponds to the fourth channel. The determining unit 510 may determine, if a correlation between the first channel and the third channel is greater than a preset threshold, and a correlation between the second channel and the fourth channel is greater than the threshold, that the channels between the UE and the dual-columns cross polarization antennas are LOS paths.

Optionally, as another embodiment, the determining unit 510 may determine a difference value between a first phase and a second phase according to the full-band spatial correlation matrix, where the first phase is a phase difference between the first channel and the third channel, and the second phase is a phase difference between the second channel and the fourth channel. The determining unit 510 may filter the difference value between the first phase and the second phase, to obtain the cable compensation phase.

Optionally, as another embodiment, when the baseband unit 500 receives the uplink sounding signal from the UE for a $p^{th}$ time,

$$\text{the full-band spatial correlation matrix } R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

where an element $r_{ij}(p)$ in $R(p)$ represents a correlation between an $i^{th}$ channel and a $j^{th}$ channel between the UE and the baseband unit 500 when the baseband unit 500 receives the uplink sounding signal from the UE for the $p^{th}$ time, and p is a positive integer.

The determining unit 510 may determine, if the following inequations (1) and (2) are both true, that the channels between the UE and the dual-columns cross polarization antennas when the uplink sounding signal from the UE is received for the $p^{th}$ time are LOS paths.

Optionally, as another embodiment, the determining unit 510 may determine, according to equation (3), a difference value $\Delta(p)$ between the first phase and the second phase when the uplink sounding signal from the UE is received for the $p^{th}$ time.

When p is greater than 1, the determining unit 510 may filter, according to equation (4), the difference value between the first phase and the second phase when the uplink sounding signal from the UE is received for the $p^{th}$ time, to obtain a cable compensation phase $\hat{\Delta}(p)$ when the uplink sounding signal from the UE is received for the $p^{th}$ time.

When p is 1, the determining unit 510 may obtain, according to equation (5), a cable compensation phase $\hat{\Delta}(1)$ when the uplink sounding signal from the UE is received for a first time.

Optionally, as another embodiment, m may be 2.

The generating unit 520 may generate the 4 channels of baseband signals according to equation (6).

Optionally, as another embodiment, m may be 4. The generating unit 520 may generate a first channel of baseband signal according to a signal corresponding to a first logical port, generate a second channel of baseband signal according to a signal corresponding to a third logical port, generate a third channel of baseband signal according to a signal corresponding to a second logical port, and generate a fourth channel of baseband signal according to a signal corresponding to a fourth logical port.

Optionally, as another embodiment, m may be 4. The generating unit 520 may generate the 4 channels of baseband signals according to equation (7).

It should be noted that, the baseband unit 500 may correspond to the baseband unit executing the communication method in FIG. 1, so that the corresponding process of the communication method in FIG. 1 can be implemented. The embodiments of the communication method in FIG. 1 and the embodiment of the baseband unit 500 may refer to each other.

FIG. 6 is a schematic block diagram of a baseband unit according to another embodiment of the present invention. The baseband unit 600 in FIG. 6 includes a memory 610 and a processor 620.

The memory 610 is connected to the processor 620 through a data bus 630.

The memory 610 stores an executable instruction.

The processor 620 executes the executable instruction stored in the memory 610, and is configured to: determine compensation coefficients respectively corresponding to 4 transmit channels of an IF/RF unit; determine a cable compensation phase according to an uplink sounding signal received from a UE, where dual-columns cross polarization antennas of a base station to which the baseband unit 600 belongs include a first group of co-polarized antennas and a second group of co-polarized antennas, and the cable compensation phase is a difference between a cable phase difference corresponding to the first group of co-polarized antennas and a cable phase difference corresponding to the second group of co-polarized antennas; generate 4 channels of baseband signals according to m channels of signals which are in a one-to-one correspondence with logical ports, where m is a positive integer; and correct the 4 channels of baseband signals according to the compensation coefficients respectively corresponding to the 4 transmit channels and the cable compensation phase, so as to send the 4 channels of corrected baseband signals to the UE through the 4 transmit channels and the dual-columns cross polarization antennas.

In this embodiment of the present invention, a cable compensation phase is determined according to an uplink sounding signal from a UE, and 4 channels of baseband signals are corrected according to compensation coefficients of 4 transmit channels and the cable compensation phase, so that phases of various channels of transmit signals can be controlled accurately.

Optionally, as an embodiment, the processor 620 may determine channel responses between the UE and the baseband unit 600 according to the uplink sounding signal received from the UE. The processor 620 may determine, according to the channel responses between the UE and the baseband unit 600, that channels between the UE and the dual-columns cross polarization antennas are LOS paths. The processor 620 may determine a cable compensation phase according to the channel responses between the UE and the baseband unit 600.

Optionally, as another embodiment, the processor 620 may determine a full-band spatial correlation matrix according to the channel responses between the UE and baseband unit 600. The processor 620 determines, according to the full-band spatial correlation matrix, that the channels between the UE and the dual-columns cross polarization antennas are LOS paths.

Optionally, as another embodiment, the first group of co-polarized antennas includes a first antenna and a third antenna, the second group of co-polarized antennas includes a second antenna and a fourth antenna, channels between the UE and the baseband unit include a first channel, a second channel, a third channel, and a fourth channel, the first antenna corresponds to the first channel, the second antenna corresponds to the second channel, the third antenna corresponds to the third channel, and the fourth antenna corresponds to the fourth channel. The processor 620 may determine, if a correlation between the first channel and the third channel is greater than a preset threshold, and a correlation between the second channel and the fourth channel is greater than the threshold, that the channels between the UE and the dual-columns cross polarization antennas are LOS paths.

Optionally, as another embodiment, the processor 620 may determine a difference value between a first phase and a second phase according to the full-band spatial correlation matrix, where the first phase is a phase difference between the first channel and the third channel, and the second phase is a phase difference between the second channel and the fourth channel. The processor 620 may filter the difference value between the first phase and the second phase, to obtain the cable compensation phase.

Optionally, as another embodiment, when the baseband unit 600 receives the uplink sounding signal from the UE for a $p^{th}$ time,

$$\text{the full-band spatial correlation matrix } R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

where an element $r_{ij}(p)$ in $R(p)$ represents a correlation between an $i^{th}$ channel and a $j^{th}$ channel between the UE and the baseband unit 600 when the baseband unit 600 receives the uplink sounding signal from the UE for the $p^{th}$ time, and p is a positive integer.

The processor 620 may determine, if the following inequations (1) and (2) are both true, that the channels between the UE and the dual-columns cross polarization antennas when the uplink sounding signal from the UE is received for the $p^{th}$ time are LOS paths.

Optionally, as another embodiment, the processor 620 may determine, according to equation (3), a difference value $\Delta(p)$ between the first phase and the second phase when the uplink sounding signal from the UE is received for the $p^{th}$ time.

When p is greater than 1, the processor 620 may filter, according to equation (4), the difference value between the first phase and the second phase when the uplink sounding signal from the UE is received for the $p^{th}$ time, to obtain a cable compensation phase $\hat{\Delta}(p)$ when the uplink sounding signal from the UE is received for the $p^{th}$ time.

When p is 1, the processor 620 may obtain, according to equation (5), a cable compensation phase $\hat{\Delta}(1)$ when the uplink sounding signal from the UE is received for a first time.

Optionally, as another embodiment, m may be 2.

The processor 620 may generate the 4 channels of baseband signals according to equation (6).

Optionally, as another embodiment, m may be 4.

The processor 620 may generate a first channel of baseband signal according to a signal corresponding to a first logical port, generate a second channel of baseband signal according to a signal corresponding to a third logical port, generate a third channel of baseband signal according to a signal corresponding to a second logical port, and generate a fourth channel of baseband signal according to a signal corresponding to a fourth logical port.

Optionally, as another embodiment, m may be 4. The processor 620 may generate the 4 channels of baseband signals according to equation (7).

It should be noted that, the baseband unit 600 may correspond to the baseband unit executing the communication method in FIG. 1, so that the corresponding process of the communication method in FIG. 1 can be implemented. The embodiment of the communication method in FIG. 1 and the embodiment of the baseband unit 600 may refer to each other.

FIG. 7 is a schematic block diagram of a communications device according to an embodiment of the present invention. The communications device 700 in FIG. 7 includes a baseband unit 710, an IF/RF unit 720, and dual-columns cross polarization antennas 730.

The baseband unit 710 is connected to the IF/RF unit 720 through an optical fiber, the IF/RF unit 720 is connected to the dual-columns cross polarization antennas 730 through cables, and the IF/RF unit includes 4 transmit channels. The dual-columns cross polarization antennas 730 include a first group of co-polarized antennas and a second group of co-polarized antennas, and the communications device 700 works in a mode in which there are m logical ports, where m is a positive integer.

The baseband unit 710 is configured to determine compensation coefficients respectively corresponding to 4 transmit channels; and

determine a cable compensation phase according to an uplink sounding signal received from a user equipment UE, where the cable compensation phase is a difference between a cable phase difference corresponding to the first group of co-polarized antennas and a cable phase difference corresponding to the second group of co-polarized antennas;

generate 4 channels of baseband signals according to m channels of signals which are in a one-to-one correspondence with the m logical ports; correct the 4 channels of baseband signals according to the compensation coefficients respectively corresponding to the 4 transmit channels and the cable compensation phase; and send the 4 channels of corrected baseband signals to the IF/RF unit 720.

The IF/RF unit 720 sends the 4 channels of corrected baseband signals to the UE through the 4 transmit channels and the dual-columns cross polarization antennas 730.

In this embodiment of the present invention, a cable compensation phase is determined according to an uplink sounding signal from a UE, and 4 channels of baseband signals are corrected according to compensation coefficients of 4 transmit channels and the cable compensation phase, so that phases of various channels of transmit signals can be controlled accurately.

Optionally, as an embodiment, the communications device 700 may be a base station, for example, may be a distributed base station, a macro base station, or a small-cell base station.

For example, a distributed base station with dual-columns cross polarization antennas may include a baseband unit (Baseband Unit, BBU), an RRU, and the dual-columns cross polarization antennas. The BBU may be connected to the RRU through an optical fiber. The RRU may include 4 receive channels and 4 transmit channels. The RRU is further provided with 4 antenna interfaces. Each antenna interface may be connected to 1 column of polarized antenna through 1 cable.

Optionally, as another embodiment, the baseband unit 710 may determine channel responses between the UE and the baseband unit 710 according to the uplink sounding signal received from the UE. The baseband unit 710 may determine, according to the channel responses between the UE and the baseband unit 710, that channels between the UE and the dual-columns cross polarization antennas are LOS paths. The baseband unit 710 may determine a cable compensation phase according to the channel responses between the UE and the baseband unit 710.

Optionally, as another embodiment, the baseband unit 710 may determine a full-band spatial correlation matrix according to the channel responses between the UE and baseband unit 710. The baseband unit 710 determines, according to the full-band spatial correlation matrix, that the channels between the UE and the dual-columns cross polarization antennas are LOS paths.

Optionally, as another embodiment, the first group of co-polarized antennas includes a first antenna and a third antenna, the second group of co-polarized antennas includes a second antenna and a fourth antenna, channels between the UE and the baseband unit include a first channel, a second channel, a third channel, and a fourth channel, the first antenna corresponds to the first channel, the second antenna corresponds to the second channel, the third antenna corresponds to the third channel, and the fourth antenna corresponds to the fourth channel. The baseband unit 710 may determine, if a correlation between the first channel and the third channel is greater than a preset threshold, and a correlation between the second channel and the fourth channel is greater than the threshold, that the channels between the UE and the dual-columns cross polarization antennas are LOS paths.

Optionally, as another embodiment, the baseband unit 710 may determine a difference value between a first phase and a second phase according to the full-band spatial correlation matrix, where the first phase is a phase difference between the first channel and the third channel, and the second phase is a phase difference between the second channel and the fourth channel. The baseband unit 710 may filter the difference value between the first phase and the second phase, to obtain the cable compensation phase.

Optionally, as another embodiment, when the baseband unit 710 receives the uplink sounding signal from the UE for a $p^{th}$ time,

$$\text{the full-band spatial correlation matrix} \quad R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

where an element $r_{ij}(p)$ in $R(p)$ represents a correlation between an $i^{th}$ channel and a $j^{th}$ channel between the UE and the baseband unit when the baseband unit receives the uplink sounding signal from the UE for the $p^{th}$ time, and p is a positive integer.

The baseband unit 710 may determine, if the following inequations (1) and (2) are both true, that the channels between the UE and the dual-columns cross polarization antennas when the uplink sounding signal from the UE is received for the $p^{th}$ time are LOS paths.

Optionally, as another embodiment, the baseband unit 710 may determine, according to equation (3), a difference value $\Delta(p)$ between the first phase and the second phase when the uplink sounding signal from the UE is received for the $p^{th}$ time.

When p is greater than 1, the baseband unit 710 may filter, according to equation (4), the difference value between the first phase and the second phase when the uplink sounding signal from the UE is received for the $p^{th}$ time, to obtain a cable compensation phase $\hat{\Delta}(p)$ when the uplink sounding signal from the UE is received for the $p^{th}$ time.

When p is 1, the baseband unit 710 may obtain, according to equation (5), a cable compensation phase $\hat{\Delta}(1)$ when the uplink sounding signal from the UE is received for a first time.

Optionally, as another embodiment, m may be 2.

The baseband unit 710 may generate the 4 channels of baseband signals according to equation (6).

Optionally, as another embodiment, m may be 4.

The baseband unit 710 may generate a first channel of baseband signal according to a signal corresponding to a first logical port, generate a second channel of baseband signal according to a signal corresponding to a third logical port, generate a third channel of baseband signal according to a signal corresponding to a second logical port, and generate a fourth channel of baseband signal according to a signal corresponding to a fourth logical port.

Optionally, as another embodiment, m may be 4. The baseband unit 710 may generate the 4 channels of baseband signals according to equation (7).

It should be noted that, the baseband unit 710 in the communications device 700 may correspond to the baseband unit in the communication method in FIG. 1, and may also correspond to the baseband unit 500 in FIG. 5, or may correspond to the baseband unit 600 in FIG. 6, so that the corresponding process of the communication method in FIG. 1 can be implemented. The embodiment of the communication method in FIG. 1 and the embodiment of the communications device 700 may refer to each other.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A baseband unit (211) for use in a communication device comprising the baseband unit, intermediate frequency/radio frequency, IF/RF, unit (212), and dual-columns cross polarization antennas (213), wherein the IF/RF, unit is connected to the dual-columns cross polarization antennas through cables, the IF/RF unit comprises 4 transmit channels, and the dual-columns cross polarization antennas comprises a first group of co-polarized antennas and a second group of co-polarized antennas, the first group of co-polarized antennas having a different polarization than the second group of co-polarized antennas; wherein the baseband unit is configured to:

determine compensation coefficients respectively corresponding to the 4 transmit channels determine a cable compensation phase according to an uplink sounding signal received from a user equipment UE (220), wherein the cable compensation phase is a difference between a cable phase difference corresponding to the first group of co-polarized antennas and a cable phase difference corresponding to the second group of co-polarized antennas, where;

generate 4 channels of baseband signals according to m channels of signals which are in a one-to-one correspondence with m logical ports, wherein m is a positive integer;

correct the 4 channels of baseband signals according to the compensation coefficients and the cable compensation phase; send the 4 channels of corrected baseband signals to the UE through the 4 transmit channels and the dual-columns cross polarization antennas.

2. The baseband unit (211) according to claim 1, wherein the baseband unit is configured to determine a cable compensation phase according to an uplink sounding signal received from a user equipment UE comprises:
the baseband unit is configured to:

determine channel responses between the UE and the baseband unit according to the uplink sounding signal received from the UE;

determine, according to the channel responses between the UE and the baseband unit, that channels between the UE and the dual-columns cross polarization antennas are line of sight, LOS, paths; and

determine the cable compensation phase according to the channel responses between the UE and the baseband unit.

3. The baseband unit (211) according to claim 2, wherein that the baseband unit is configured to determine, according to the channel responses between the UE and the baseband unit, that channels between the UE and the dual-columns cross polarization antennas are LOS paths comprises:
the baseband unit is configured to:

determine a full-band spatial correlation matrix according to the channel responses between the UE and the baseband unit; and

determine, according to the full-band spatial correlation matrix, that the channels between the UE and the dual-columns cross polarization antennas are LOS paths.

4. The baseband unit (211) according to claim 3, wherein the first group of co-polarized antennas comprises a first antenna and a third antenna, the second group of co-polarized antennas comprises a second antenna and a fourth antenna, channels between the UE and the baseband unit comprise a first channel, a second channel, a third channel, and a fourth channel, the first antenna corresponds to the first channel, the second antenna corresponds to the second channel, the third antenna corresponds to the third channel, and the fourth antenna corresponds to the fourth channel; and wherein the baseband unit is configured to determine, according to the full-band spatial correlation matrix, that the channels between the UE and the dual-columns cross polarization antennas are LOS paths comprises:
the baseband unit is configured to:
determine, if a correlation between the first channel and the third channel is greater than a preset threshold, and a correlation between the second channel and the fourth channel is greater than the threshold, that the channels between the UE and the dual-columns cross polarization antennas are LOS paths.

5. The baseband unit (211) according to claim 4, wherein that the baseband unit is configured to determine the cable compensation phase according to the channel responses between the UE and the baseband unit comprises:
the baseband unit is configured to:

determine a difference value between a first phase and a second phase according to the full-band spatial correlation matrix, wherein the first phase is a phase difference between the first channel and the third channel, and the second phase is a phase difference between the second channel and the fourth channel; and
filter the difference value between the first phase and the second phase, to obtain the cable compensation phase.

6. The baseband unit (211) according to claim 5, wherein when the baseband unit receives the uplink sounding signal from the UE for a $p^{th}$ time,

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

the full-band spatial correlation matrix wherein an element $r_{ij}(p)$ in $R(p)$ represents a correlation between an $i^{th}$ channel and a $j^{th}$ channel between the UE and the baseband unit when the baseband unit receives the uplink sounding signal from the UE for the $p^{th}$ time, and p is a positive integer; and wherein the baseband unit is configured to determine, if a correlation between the first channel and the third channel is greater than a preset threshold, and a correlation between the second channel and the fourth channel is greater than the threshold, that the channels between the UE and the dual-columns cross polarization antennas are LOS paths comprises:

the baseband unit is configured to:

determine, if the following inequations are both true, that the channels between the UE and the dual-columns cross polarization antennas when the uplink sounding signal from the UE is received for the $p^{th}$ time are LOS paths:

$$\left| r_{02}(p) \right| / \sqrt{r_{00}(p) r_{22}(p)} > Thre \quad \text{and} \quad \left| r_{13}(p) \right| / \sqrt{r_{11}(p) r_{33}(p)} > Thre$$

wherein Thre represents the threshold.

7. The baseband unit (211) according to claim 6, wherein that the baseband unit is configured to determine a difference value between a first phase and a second phase according to the full-band spatial correlation matrix comprises:

the baseband unit is configured to:

determine, according to the following equation, a difference value $\Delta(p)$ between the first phase and the second phase when the uplink sounding signal from the UE is received for the $p^{th}$ time:

$$\Delta(p) = phase(r_{20}(p)) - phase(r_{31}(p))$$

wherein $phase(r_{20}(p))$ represents the first phase, and $phase(r_{31}(p))$ represents the second phase, and p is a positive integer; and wherein the baseband unit is configured to filter the difference value between the first phase and the second phase, to obtain the cable compensation phase comprises:

the baseband unit is configured to:

when p is greater than 1, obtain, according to the following equation, a cable compensation phase $\hat{\Delta}(p)$ when the uplink sounding signal from the UE is received for the $p^{th}$ time:

$$\hat{\Delta}(p) = (1 - \alpha) * \hat{\Delta}(p - 1) + \alpha * \Delta(p)$$

wherein $\hat{\Delta}(p\text{-}1)$ represents a cable compensation phase when the uplink sounding signal from the UE is received for a $(p\text{-}1)^{th}$ time, and $\alpha$ represents a filtering coefficient; and

when p is 1, obtain, according to the following equation, a cable compensation phase $\Delta(1)$ when the uplink sounding signal from the UE is received for a first time:

$$\hat{\Delta}(1) = \Delta(1).$$

8. The baseband unit (211) according to any one of claims 1 to 7, wherein m is 2; and wherein the baseband unit is configured to generate 4 channels of baseband signals according to m channels of signals corresponding to the m logical ports comprises:

the baseband unit is configured to generate the 4 channels of baseband signals according to the following equation:

$$\begin{bmatrix} x_0(k) \\ x_1(k) \\ x_2(k) \\ x_3(k) \end{bmatrix} = \begin{bmatrix} 1 & 0 \\ e^{j2\pi dk/N_{fft}} & 0 \\ 0 & 1 \\ 0 & -e^{j2\pi dk/N_{fft}} \end{bmatrix} \begin{bmatrix} s_0(k) \\ s_1(k) \end{bmatrix}$$

wherein k represents a subcarrier index, $x_0(k)$, $x_1(k)$, $x_2(k)$, and $x_3(k)$ represent 4 channels of baseband signals on a $k^{th}$ subcarrier, $s_0(k)$ and $s_1(k)$ represent signals respectively corresponding to 2 logical ports on the $k^{th}$ subcarrier, d represents the number of cyclic delay points, $N_{fft}$ represents the number of system fast Fourier transformation FFT points, and k is a positive integer; and $x_0(k)$ and $x_2(k)$ correspond to the first group of co-polarized antennas, and $x_1(k)$ and $x_3(k)$ correspond to the second group of co-polarized antennas.

9. The baseband unit (211) according to any one of claims 1 to 7, wherein m is 4; and wherein the baseband unit is configured to generate 4 channels of baseband signals according to m channels of signals corresponding to the m logical ports comprises:
the baseband unit is configured to: generate a first channel of baseband signal according to a signal corresponding to a first logical port, generate a second channel of baseband signal according to a signal corresponding to a third logical port, generate a third channel of baseband signal according to a signal corresponding to a second logical port, and generate a fourth channel of baseband signal according to a signal corresponding to a fourth logical port.

10. The baseband unit (211) according to claim 9, wherein the baseband unit is configured to generate a first channel of baseband signal according to a signal corresponding to a first logical port, generate a second channel of baseband signal according to a signal corresponding to a third logical port, generate a third channel of baseband signal according to a signal corresponding to a second logical port, and generate a fourth channel of baseband signal according to a signal corresponding to a fourth logical port comprises:
the baseband unit is configured to:
generate the 4 channels of baseband signals according to the following equation:

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix}$$

wherein k represents a subcarrier index, $x_0(k)$, $x_1(k)$, $x_2(k)$, and $x_3(k)$ represent 4 channels of baseband signals on a $k^{th}$ subcarrier, $s_0(k)$, $s_1(k)$, $s_2(k)$, and $s_3(k)$ represent signals respectively corresponding to 4 logical ports on the $k^{th}$ subcarrier, and k is a positive integer; and $x_0(k)$ and $x_2(k)$ correspond to the first group of co-polarized antennas, and $x_1(k)$ and $x_3(k)$ correspond to the second group of co-polarized antennas.

11. A communications device (210) comprising a baseband unit (211) according to any one of claims 1 to 10, an intermediate frequency/radio frequency, IF/RF, unit (212), and dual-columns cross polarization antennas (213), wherein the baseband unit is connected to the IF/RF unit through an optical fiber, the IF/RF unit is connected to the dual-columns cross polarization antennas through cables, the IF/RF unit comprises 4 transmit channels, the dual-columns cross polarization antennas comprise a first group of co-polarized antennas and a second group of co-polarized antennas, and the communications device is configured to work in a mode in which there are the m logical ports.

12. The communication device (210) according to claim 11, wherein the communications device is a base station.

13. A communication method for use in a base station, wherein the base station comprises a baseband unit, an intermediate frequency/radio frequency, IF/RF, unit, and dual-columns cross polarization antennas, wherein the baseband unit is connected to the IF/RF unit through an optical fiber, the IF/RF unit is connected to the dual-columns cross polarization antennas through cables, the IF/RF unit comprises 4 transmit channels, the dual-columns cross polarization antennas comprise a first group of co-polarized antennas and a second group of co-polarized antennas, the first group of co-polarized antennas having a different polarization than the second group of co-polarized antennas, and the communications method works in a mode in which there are m logical ports, m being a positive integer, the communication method comprising:

determining (110) compensation coefficients respectively corresponding to the 4 transmit channels;
determining (120) a cable compensation phase according to an uplink sounding signal received from a user equipment UE, wherein the cable compensation phase is a difference between a cable phase difference corresponding to the first group of co-polarized antennas and a cable phase difference corresponding to the second group of co-polarized antennas;
generating (130) 4 channels of baseband signals according to m channels of signals which are in a one-to-one correspondence with the m logical ports; and
correcting (140) the 4 channels of baseband signals according to the compensation coefficients and the cable compensation phase;
send the 4 channels of corrected baseband signals to the UE through the 4 transmit channels and the dual-columns cross polarization antennas.

14. The communication method according to claim 13, wherein the determining a cable compensation phase according to an uplink sounding signal received from a UE comprises:

determining channel responses between the UE and the base station according to the uplink sounding signal received from the UE;
determining, according to the channel responses between the UE and the base station, that channels between the UE and the dual-columns cross polarization antennas are line of sight, LOS, paths; and
determining the cable compensation phase according to the channel responses between the UE and the base station.

15. The communication method according to claim 14, wherein the determining, according to the channel responses between the UE and the base station, that channels between the UE and the dual-columns cross polarization antennas are LOS paths comprises:

determining a full-band spatial correlation matrix according to the channel responses between the UE and the base station; and
determining, according to the full-band spatial correlation matrix, that the channels between the UE and the dual-columns cross polarization antennas are LOS paths.

16. The communication method according to claim 15, wherein the first group of co-polarized antennas comprises a first antenna and a third antenna, the second group of co-polarized antennas comprises a second antenna and a fourth antenna, channels between the UE and the base station comprise a first channel, a second channel, a third channel, and a fourth channel, the first antenna corresponds to the first channel, the second antenna corresponds to the second channel, the third antenna corresponds to the third channel, and the fourth antenna corresponds to the fourth channel; and wherein the determining, according to the full-band spatial correlation matrix, that the channels between the UE and the dual-columns cross polarization antennas are LOS paths comprises:
determining, if a correlation between the first channel and the third channel is greater than a preset threshold, and a correlation between the second channel and the fourth channel is greater than the threshold, that the channels between the UE and the dual-columns cross polarization antennas are LOS paths.

17. The communication method according to claim 16, wherein the determining the cable compensation phase according to the channel responses between the UE and the base station comprises:

determining a difference value between a first phase and a second phase according to the full-band spatial correlation matrix, wherein the first phase is a phase difference between the first channel and the third channel, and the second phase is a phase difference between the second channel and the fourth channel; and
filtering the difference value between the first phase and the second phase, to obtain the cable compensation phase.

18. The communication method according to claim 17, wherein when the uplink sounding signal from the UE is received for a $p^{th}$ time,

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

the full-band spatial correlation matrix wherein an element $r_{ij}(p)$ in $R(p)$ represents a correlation between an $i^{th}$ channel and a $j^{th}$ channel between the UE and the base station when the uplink sounding signal from the UE is received for the $p^{th}$ time, and p is a positive integer; and wherein the determining, if a correlation between the first channel and the third channel is greater than a preset threshold, and a correlation between the second channel and the fourth channel is greater than the threshold, that the channels between the UE and the dual-columns cross polarization antennas are LOS paths comprises: determining, if the following inequations are both true, that the channels between the UE and the dual-columns cross polarization antennas when the uplink sounding signal from the UE is received for the $p^{th}$ time are LOS paths:

$$\left| r_{02}(p) \right| / \sqrt{r_{00}(p)r_{22}(p)} > Thre \ \text{ and } \ \left| r_{13}(p) \right| / \sqrt{r_{11}(p)r_{33}(p)} > Thre$$

wherein Thre represents the threshold.

19. The communication method according to claim 18, wherein the determining a difference value between a first phase and a second phase according to the full-band spatial correlation matrix comprises: determining, according to the following equation, a difference value $\Delta(p)$ between the first phase and the second phase when the uplink sounding signal from the UE is received for the $p^{th}$ time:

$$\Delta(p) = phase(r_{20}(p)) - phase(r_{31}(p))$$

wherein $phase(r_{20}(p))$ represents the first phase, and $phase(r_{31}(p))$ represents the second phase; and wherein the filtering the difference value between the first phase and the second phase, to obtain the cable compensation phase comprises: when p is greater than 1, obtaining, according to the following equation, a cable compensation phase $\hat{\Delta}(p)$ when the uplink sounding signal from the UE is received for the $p^{th}$ time:

$$\hat{\Delta}(p) = (1 - \alpha) * \hat{\Delta}(p-1) + \alpha * \Delta(p)$$

wherein $\hat{\Delta}(p-1)$ represents a cable compensation phase when the uplink sounding signal from the UE is received for a $(p-1)^{th}$ time, and $\alpha$ represents a filtering coefficient; and when p is 1, obtaining, according to the following equation, a cable compensation phase $\Delta(1)$ when the uplink sounding signal from the UE is received for a first time:

$$\hat{\Delta}(1) = \Delta(1).$$

20. The communication method according to any one of claims 13 to 19, wherein m is 2; and wherein the generating 4 channels of baseband signals according to m channels of signals corresponding to m logical ports comprises: generating the 4 channels of baseband signals according to the following equation:

$$\begin{bmatrix} x_0(k) \\ x_1(k) \\ x_2(k) \\ x_3(k) \end{bmatrix} = \begin{bmatrix} 1 & 0 \\ e^{j2\pi dk/N_{fft}} & 0 \\ 0 & 1 \\ 0 & -e^{j2\pi dk/N_{fft}} \end{bmatrix} \begin{bmatrix} s_0(k) \\ s_1(k) \end{bmatrix}$$

wherein k represents a subcarrier index, $x_0(k)$, $x_1(k)$, $x_2(k)$, and $x_3(k)$ represent 4 channels of baseband signals on a $k^{th}$ subcarrier, $s_0(k)$ and $s_1(k)$ represent signals respectively corresponding to 2 logical ports on the $k^{th}$ subcarrier, d represents the number of cyclic delay points, $N_{fft}$ represents the number of system fast Fourier transformation FFT points, and k is a positive integer; and
$x_0(k)$ and $x_2(k)$ correspond to the first group of co-polarized antennas, and $x_1(k)$ and $x_3(k)$ correspond to the second group of co-polarized antennas.

21. The communication method according to any one of claims 13 to 19, wherein m is 4; and wherein the generating 4 channels of baseband signals according to m channels of signals corresponding to m logical ports comprises:
generating a first channel of baseband signal according to a signal corresponding to a first logical port, generating a second channel of baseband signal according to a signal corresponding to a third logical port, generating a third channel of baseband signal according to a signal corresponding to a second logical port, and generating a fourth channel of baseband signal according to a signal corresponding to a fourth logical port.

22. The communication method according to claim 21, wherein the generating a first channel of baseband signal according to a signal corresponding to a first logical port, the generating a second channel of baseband signal according to a signal corresponding to a third logical port, the generating a third channel of baseband signal according to a signal corresponding to a second logical port, and the generating a fourth channel of baseband signal according to a signal corresponding to a fourth logical port comprises:
generating the 4 channels of baseband signals according to the following equation:

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix}$$

wherein k represents a subcarrier index, $x_0(k)$, $x_1(k)$, $x_2(k)$, and $x_3(k)$ represent 4 channels of baseband signals on a $k^{th}$ subcarrier, $s_0(k)$, $s_1(k)$, $s_2(k)$, and $s_3(k)$ represent signals respectively corresponding to 4 logical ports on the $k^{th}$ subcarrier, and k is a positive integer; and
$x_0(k)$ and $x_2(k)$ correspond to the first group of co-polarized antennas, and $x_1(k)$ and $x_3(k)$ correspond to the second group of co-polarized antennas.

**Patentansprüche**

1. Basisbandeinheit (211) zur Verwendung in einer Kommunikationsvorrichtung, die die Basisbandeinheit, Zwischenfrequenz/Hochfrequenz- bzw. ZF/HF-Einheit (212) und Zweispalten-Kreuzpolarisationsantennen (213) umfasst, wobei die ZF/HF-Einheit durch Kabel mit den Zweifachspalten-Kreuzpolarisationsantennen verbunden ist, die ZF/HF-Einheit 4 Sendekanäle umfasst und die Zweifachspalten-Kreuzpolarisationsantennen eine erste Gruppe kopolarisierter Antennen und eine zweite Gruppe kopolarisierter Antennen umfassen und die erste Gruppe von kopolarisierten Antennen eine andere Polarisation als die zweite Gruppe von kopolarisierten Antennen aufweist;
wobei die Basisbandeinheit ausgelegt ist zum
Bestimmen von Kompensationskoeffizienten, die jeweils den 4 Sendekanälen entsprechen;
Bestimmen einer Kabelkompensationsphase gemäß einem von einem Benutzergerät UE (220) empfangenen Aufwärtsstrecken-Sondierungssignal, wobei die Kabelkompensationsphase eine Differenz zwischen einer Kabelphasendifferenz, die der ersten Gruppe kopolarisierter Antennen entspricht, und einer Kabelphasendifferenz, die der zweiten Gruppe von kopolarisierten Antennen entspricht, ist, wo

Erzeugen 4 Kanäle von Basisbandsignalen gemäß m Kanälen von Signalen, die sich in eindeutiger Korrespondenz mit m logischen Ports befinden, wobei m eine positive ganze Zahl ist;

Korrigieren die 4 Kanäle von Basisbandsignalen gemäß den Kompensationskoeffitienten und der Kabelkumponsationsphase;

Senden die 4 Kanäle korrigierter Basisbandsignale durch die 4 Sendekanäle und die Zweifachspalten-Kreuzpolarisationsantennen zu dem UE.

2. Basisbandeinheit (211) nach Anspruch 1, wobei, dass die Basisbandeinheit ausgelegt ist zum Bestimmen einer Kabelkompensationsphase gemäß einem von einem Benutzergerät UE empfangenen Aufwärtsstrecken-Sondierungssignal Folgendes umfasst:

die Basisbandeinheit ist ausgelegt zum
Bestimmen von Kanalantworten zwischen dem UE und der Basisbandeinheit gemäß dem von dem UE empfangenen Aufwärtsstrecken-Sondierungssignal;
Bestimmen gemäß den Kanalantworten zwischen dem UE und der Basisbandeinheit, dass Kanäle zwischen dem UE und den Zweifachspalten-Kreuzpolarisationsantennen Sichtlinien- bzw. LOS-Pfade sind; und
Bestimmen der Kabelkompensationsphase gemäß den Kanalantworten zwischen dem UE und der Basisbandeinheit.

3. Basisbandeinheit (211) nach Anspruch 2, wobei, dass die Basisbandeinheit ausgelegt ist zum Bestimmen gemäß den Kanalantworten zwischen dem UE und der Basisbandeinheit, dass Kanäle zwischen dem UE und den Zweifachspalten-Kreuzpolarisationsantennen LOS-Pfade sind, Folgendes umfasst:
die Basisbandeinheit ist ausgelegt zum:

Bestimmen einer räumlichen Vollband-Korrelationsmatrix gemäß den Kanalantworten zwischen dem UE und der Basisbandeinheit; und
Bestimmen gemäß der räumlichen Vollband-Korrelationsmatrix, dass die Kanäle zwischen dem UE und den Zweifachspalten-Kreuzpolarisationsantennen LOS-Pfade sind.

4. Basisbandeinheit (211) nach Anspruch 3, wobei die erste Gruppe kopolarisierter Antennen eine erste Antenne und eine dritte Antenne umfasst, die zweite Gruppe kopolarisierter Antennen eine zweite Antenne und eine vierte Antenne umfasst, Kanäle zwischen dem UE und der Basisbandeinheit einen ersten Kanal, einen zweiten Kanal, einen dritten Kanal und einen vierten Kanal umfassen, die erste Antenne dem ersten Kanal entspricht, die zweite Antenne dem zweiten Kanal entspricht, die dritte Antenne dem dritten Kanal entspricht und die vierte Antenne dem vierten Kanal entspricht; und
wobei
dass die Basisbandeinheit ausgelegt ist zum Bestimmen gemäß der räumlichen Vollband-Korrelationsmatrix, dass die Kanäle zwischen dem UE und den Zweifachspalten-Kreuzpolarisationsantennen LOS-Pfade sind, Folgendes umfasst:
die Basisbandeinheit ist ausgelegt zum:
Bestimmen, dass die Kanäle zwischen dem UE und den Zweifachspalten-Kreuzpolarisationsantennen LOS-Pfade sind, wenn eine Korrelation zwischen dem ersten Kanal und dem dritten Kanal größer als eine voreingestellte Schwelle ist und eine Korrelation zwischen dem zweiten Kanal und dem vierten Kanal größer als die Schwelle ist.

5. Basisbandeinheit (211) nach Anspruch 4, wobei, dass die Basisbandeinheit ausgelegt ist zum Bestimmen der Kabelkompensationsphase gemäß den Kanalantworten zwischen dem UE und der Basisbandeinheit Folgendes umfasst:

die Basisbandeinheit ist ausgelegt zum
Bestimmen eines Differenzwerts zwischen einer ersten Phase und einer zweiten Phase gemäß der räumlichen Vollband-Korrelationsmatrix, wobei die erste Phase eine Phasendifferenz zwischen dem ersten Kanal und dem dritten Kanal ist und die zweite Phase eine Phasendifferenz zwischen dem zweiten Kanal und dem vierten Kanal ist; und
Filtern des Differenzwerts zwischen der ersten Phase und der zweiten Phase, um die Kabelkompensationsphase zu erhalten.

**6.** Basisbandeinheit (211) nach Anspruch 5, wobei, wenn die Basisbandeinheit das Aufwärtsstrecken-Sondierungssignal ein p-tes Mal von dem UE empfängt, die räumliche Vollband-Korrelationsmatrix

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix}$$

wobei ein Element $r_{ij}(p)$ in $R(p)$ eine Korrelation zwischen einem i-ten Kanal und einem j-ten Kanal zwischen dem UE und der Basisbandeinheit, wenn die Basisbandeinheit das Aufwärtsstrecken-Sondierungssignal zum p-ten Mal von dem UE empfängt, repräsentiert und p eine positive ganze Zahl ist; und wobei

dass die Basisbandeinheit ausgelegt ist zum Bestimmen, dass die Kanäle zwischen dem UE und den Zweifachspalten-Kreuzpolarisationsantennen LOS-Pfade sind, wenn eine Korrelation zwischen dem ersten Kanal und dem dritten Kanal größer als eine voreingestellte Schwelle ist und eine Korrelation zwischen dem zweiten Kanal und dem vierten Kanal größer als die Schwelle ist, Folgendes umfasst:

die Basisbandeinheit ist ausgelegt zum
Bestimmen, dass die Kanäle zwischen dem UE und den Zweifachspalten-Kreuzpolarisationsantennen, wenn das Aufwärtsstrecken-Sondierungssignal von dem UE zum p-ten Mal empfangen wird, LOS-Pfade sind, wenn die folgenden Ungleichungen beide wahr sind:

$$\left|r_{02}(p)\right| / \sqrt{r_{00}(p)r_{22}(p)} > Thre$$

und

$$\left|r_{13}(p)\right| / \sqrt{r_{11}(p)r_{33}(p)} > Thre,$$

wobei Thre die Schwelle repräsentiert.

**7.** Basisbandeinheit (211) nach Anspruch 6, wobei, dass die Basisbandeinheit ausgelegt ist zum Bestimmen eines Differenzwerts zwischen einer ersten Phase und einer zweiten Phase gemäß der räumlichen Vollband-Korrelationsmatrix Folgendes umfasst:

die Basisbandeinheit ist ausgelegt zum
Bestimmen eines Differenzwerts $\Delta(p)$ zwischen der ersten Phase und der zweiten Phase, wenn das Aufwärtsstrecken-Sondierungssignal von dem UE zum p-ten Mal empfangen wird, gemäß der folgenden Gleichung:

$$\Delta(p) = phase(r_{20}(p)) - phase(r_{31}(p)),$$

wobei $phase(r_{20}(p))$ die erste Phase repräsentiert, und $phase(r_{31}(p))$ die zweite Phase repräsentiert und p eine positive ganze Zahl ist; und wobei

dass die Basisbandeinheit ausgelegt ist zum Filtern des Differenzwerts zwischen der ersten Phase und der zweiten Phase, um die Kabelkompensationsphase zu erhalten, Folgendes umfasst:

die Basisbandeinheit ist ausgelegt zum

Erhalten einer Kabelkompensationsphase $\hat{\Delta}(p)$, wenn das Aufwärtsstrecken-Sondierungssignal von dem UE zum p-ten Mal empfangen wird, wenn p größer als 1 ist, gemäß der folgenden Gleichung:

$$\hat{\Delta}(p) = (1-\alpha) * \hat{\Delta}(p-1) + \alpha * \Delta(p)$$

wobei $\hat{\Delta}(p\text{-}1)$ eine Kabelkompensationsphase, wenn das Aufwärtsstrecken-Sondierungssignal von dem UE ein (p-1)-tes Mal empfangen wird, repräsentiert und $\alpha$ einen Filterungskoeffizienten repräsentiert; und

Wenn p 1 ist, erhalten einer Kabelkompensationsphase $\Delta(1)$, wenn das Aufwärtsstrecken-Sondierungssignal von dem UE ein erstes Mal empfangen wird, gemäß der folgenden Gleichung: $\hat{\Delta}(1) = \Delta(1)$.

8. Basisbandeinheit (211) nach einem der Ansprüche 1 bis 7, wobei m 2 ist; und wobei

dass die Basisbandeinheit ausgelegt ist zum Erzeugen von 4 Kanälen von Basisbandsignalen gemäß m Kanälen von Signalen, die den m logischen Ports entsprechen, Folgendes umfasst:

die Basisbandeinheit ist ausgelegt zum Erzeugen der 4 Kanäle von Basisbandsignalen gemäß der folgenden Gleichung:

$$\begin{bmatrix} x_0(k) \\ x_1(k) \\ x_2(k) \\ x_3(k) \end{bmatrix} = \begin{bmatrix} 1 & 0 \\ e^{j2\pi dk/N_{fft}} & 0 \\ 0 & 1 \\ 0 & -e^{j2\pi dk/N_{fft}} \end{bmatrix} \begin{bmatrix} s_0(k) \\ s_1(k) \end{bmatrix}$$

wobei k einen Subträgerindex repräsentiert, $x_0(k)$, $x_1(k)$, $x_2(k)$ und $x_3(k)$ 4 Kanäle von Basisbandsignalen auf einem k-ten Subträger repräsentieren, $s_0(k)$ und $s_1(k)$ Signale repräsentieren, die jeweils 2 logischen Ports auf dem k-ten Subträger entsprechen, d die Anzahl zyklischer Verzögerungspunkte repräsentiert, $N_m$ die Anzahl von Punkten der schnellen Fouriertransformation FFT des Systems repräsentiert und k eine positive ganze Zahl ist; und

$x_0(k)$ und $x_2(k)$ der ersten Gruppe kopolarisierter Antennen entsprechen und $x_1(k)$ und $x_3(k)$ der zweiten Gruppe kopolarisierter Antennen entsprechen.

9. Basisbandeinheit (211) nach einem der Ansprüche 1 bis 7, wobei m 4 ist; und wobei

dass die Basisbandeinheit ausgelegt ist zum Erzeugen von 4 Kanälen von Basisbandsignalen gemäß m Kanälen von Signalen, die den m logischen Ports entsprechen, Folgendes umfasst:

die Basisbandeinheit ist ausgelegt zum Erzeugen eines ersten Kanals des Basisbandsignals gemäß einem Signal, das einem ersten logischen Port entspricht, Erzeugen eines zweiten Kanals des Basisbandsignals gemäß einem Signal, das einem dritten logischen Port entspricht, Erzeugen eines dritten Kanals des Basisbandsignals gemäß einem Signal, das einem zweiten logischen Port entspricht, und Erzeugen eines vierten Kanals des Basisbandsignals gemäß einem Signal, das einem vierten logischen Port entspricht.

10. Basisbandeinheit (211) nach Anspruch 9, wobei die Basisbandeinheit ausgelegt ist zum

Erzeugen eines ersten Kanals des Basisbandsignals gemäß einem Signal, das einem ersten logischen Port entspricht, Erzeugen eines zweiten Kanals des Basisbandsignals gemäß einem Signal, das einem dritten logischen Port entspricht, Erzeugen eines dritten Kanals des Basisbandsignals gemäß einem Signal, das einem zweiten logischen Port entspricht, und Erzeugen eines vierten Kanals des Basisbandsignals gemäß einem Signal, das einem vierten logischen Port entspricht, umfassend:

die Basisbandeinheit ist ausgelegt zum:

Erzeugen der 4 Kanäle von Basisbandsignalen gemäß der folgenden Gleichung:

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix}$$

wobei k einen Subträgerindex repräsentiert, $x_0(k)$, $x_1(k)$, $x_2(k)$ und $x_3(k)$ 4 Kanäle von Basisbandsignalen auf einem k-ten Subträger repräsentieren, $s_0(k)$, $s_1(k)$, $s_2(k)$ und $s_3(k)$ Signale repräsentieren, die jeweils 4 logischen Ports auf dem k-ten Subträger entsprechen, und k eine positive ganze Zahl ist; und
$x_0(k)$ und $x_2(k)$ der ersten Gruppe kopolarisierter Antennen entsprechen und $x_1(k)$ und $x_3(k)$ der zweiten Gruppe kopolarisierter Antennen entsprechen.

11. Kommunikationsvorrichtung (210), die eine Basisbandeinheit (211) nach einem der Ansprüche 1 bis 10, eine Zwischenfrequenz/Hochfrequenz- bzw. ZF/HF-Einheit (212) und Zweifachspalten-Kreuzpolarisationsantennen (213) umfasst, wobei die Basisbandeinheit mittels einer optischen Faser mit der ZF/HF-Einheit verbunden ist, die ZF/HF-Einheit mittels Kabel mit den Zweifachspalten-Kreuzpolarisationsantennen verbunden ist, die ZF/HF-Einheit 4 Sendekanäle umfasst, die Zweifachspalten-Kreuzpolarisationsantennen eine erste Gruppe kopolarisierter Antennen und eine zweite Gruppe kopolarisierter Antennen umfassen und die Kommunikationsvorrichtung ausgelegt ist zum Arbeiten in einem Modus, in dem es m logische Ports gibt.

12. Kommunikationsvorrichtung (210) nach Anspruch 11, wobei die Kommunikationsvorrichtung eine Basisstation ist.

13. Kommunikationsverfahren zur Verwendung in einer Basisstation, wobei die Basisstation eine Basisbandeinheit, eine Zwischenfrequenz/Hochfrequenz- bzw. ZF/HF-Einheit und Zweifachspalten-Kreuzpolarisationsantennen umfasst, wobei die Basisbandeinheit mittels einer optischen Faser mit der ZF/HF-Einheit verbunden ist, die ZF/HF-Einheit mittels Kabel mit den Zweifachspalten-Kreuzpolarisationsantennen verbunden ist, die ZF/HF-Einheit 4 Sendekanäle umfasst, die Zweifachspalten-Kreuzpolarisationsantennen eine erste Gruppe kopolarisierter Antennen und eine zweite Gruppe kopolarisierter Antennen umfassen, die erste Gruppe kopolarisierter Antennen eine andere Polarisation als die zweite Gruppe kopolarisierter Antenne aufweist und das Kommunikationsverfahren in einem Modus arbeitet, in dem es m logische Ports gibt, wobei m eine positive ganze Zahl ist, wobei das Kommunikationsverfahren Folgendes umfasst:

Bestimmen (110) von Kompensationskoeffizienten, die jeweils den 4 Sendekanälen entsprechen;
Bestimmen (120) einer Kabelkompensationsphase gemäß einem von einem Benutzergerät UE empfangenen Aufwärtsstrecken-Sondierungssignal, wobei die Kabelkompensationsphase eine Differenz zwischen einer Kabelphasendifferenz, die der ersten Gruppe kopolarisierter Antennen entspricht, und einer Kabelphasendifferenz, die der zweiten Gruppe von kopolarisierten Antennen entspricht, ist,
Erzeugen (130) von 4 Kanälen von Basisbandsignalen gemäß m Kanälen von Signalen, die sich in einer eindeutigen Korrespondenz mit den m logischen Ports befinden; und
Korrigieren (140) der 4 Kanäle von Basisbandsignalen gemäß den Kompensationskoeffizienten und der Kabelkompensationsphase;
Senden der 4 Kanäle von korrigierten Basisbandsignalen zum UE mittels der 4 Sendekanäle und der Zweifachspalten-Kreuzpolarisationsantennen.

14. Kommunikationsverfahren nach Anspruch 13, wobei das Bestimmen einer Kabelkompensationsphase gemäß einem von einem UE empfangenen Aufwärtsstrecken-Sondierungssignal Folgendes umfasst:

Bestimmen von Kanalantworten zwischen dem UE und der Basisstation gemäß dem von dem UE empfangenen Aufwärtsstrecken-Sondierungssignal;
Bestimmen gemäß den Kanalantworten zwischen dem UE und der Basisstation, dass Kanäle zwischen dem UE und den Zweifachspalten-Kreuzpolarisationsantennen Sichtlinien- bzw. LOS-Pfade sind; und
Bestimmen der Kabelkompensationsphase gemäß den Kanalantworten zwischen dem UE und der Basisstation.

**15.** Kommunikationsverfahren nach Anspruch 14, wobei das Bestimmen gemäß den Kanalantworten zwischen dem UE und der Basisstation, dass Kanäle zwischen dem UE und den Zweifachspalten-Kreuzpolarisationsantennen LOS-Pfade sind, Folgendes umfasst:

Bestimmen einer räumlichen Vollband-Korrelationsmatrix gemäß den Kanalantworten zwischen dem UE und der Basisstation; und
Bestimmen gemäß der räumlichen Vollband-Korrelationsmatrix, dass die Kanäle zwischen dem UE und den Zweifachspalten-Kreuzpolarisationsantennen LOS-Pfade sind.

**16.** Kommunikationsverfahren nach Anspruch 15, wobei die erste Gruppe kopolarisierter Antennen eine erste Antenne und eine dritte Antenne umfasst, die zweite Gruppe kopolarisierter Antennen eine zweite Antenne und eine vierte Antenne umfasst, Kanäle zwischen dem UE und der Basisstation einen ersten Kanal, einen zweiten Kanal, einen dritten Kanal und einen vierten Kanal umfassen, die erste Antenne dem ersten Kanal entspricht, die zweite Antenne dem zweiten Kanal entspricht, die dritte Antenne dem dritten Kanal entspricht und die vierte Antenne dem vierten Kanal entspricht; und wobei
das Bestimmen gemäß der räumlichen Vollband-Korrelationsmatrix, dass die Kanäle zwischen dem UE und den Zweifachspalten-Kreuzpolarisationsantennen LOS-Pfade sind, Folgendes umfasst:
Bestimmen, dass die Kanäle zwischen dem UE und den Zweifachspalten-Kreuzpolarisationsantennen LOS-Pfade sind, wenn eine Korrelation zwischen dem ersten Kanal und dem dritten Kanal größer als eine voreingestellte Schwelle ist und eine Korrelation zwischen dem zweiten Kanal und dem vierten Kanal größer als die Schwelle ist.

**17.** Kommunikationsverfahren nach Anspruch 16, wobei das Bestimmen der Kabelkompensationsphase gemäß den Kanalantworten zwischen dem UE und der Basisstation Folgendes umfasst:

Bestimmen eines Differenzwerts zwischen einer ersten Phase und einer zweiten Phase gemäß der räumlichen Vollband-Korrelationsmatrix, wobei die erste Phase eine Phasendifferenz zwischen dem ersten Kanal und dem dritten Kanal ist und die zweite Phase eine Phasendifferenz zwischen dem zweiten Kanal und dem vierten Kanal ist; und
Filtern des Differenzwerts zwischen der ersten Phase und der zweiten Phase, um die Kabelkompensationsphase zu erhalten.

**18.** Kommunikationsverfahren nach Anspruch 17, wobei, wenn das Aufwärtsstrecken-Sondierungssignal von dem UE ein p-tes Mal empfangen wird,
die räumliche Vollband-Korrelationsmatrix

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix}$$

wobei ein Element $r_{ij}(p)$ in $R(p)$ eine Korrelation zwischen einem i-ten Kanal und einem j-ten Kanal zwischen dem UE und der Basisstation, wenn das Aufwärtsstrecken-Sondierungssignal zum p-ten Mal von dem UE empfangen wird, repräsentiert und p eine positive ganze Zahl ist; und wobei
das Bestimmen, dass die Kanäle zwischen dem UE und den Zweifachspalten-Kreuzpolarisationsantennen LOS-Pfade sind, wenn eine Korrelation zwischen dem ersten Kanal und dem dritten Kanal größer als eine voreingestellte Schwelle ist und eine Korrelation zwischen dem zweiten Kanal und dem vierten Kanal größer als die Schwelle ist, Folgendes umfasst:
Bestimmen, dass die Kanäle zwischen dem UE und den Zweifachspalten-Kreuzpolarisationsantennen, wenn das Aufwärtsstrecken-Sondierungssignal von dem UE zum p-ten Mal empfangen wird, LOS-Pfade sind, wenn die folgenden Ungleichungen beide wahr sind:

$$\left| r_{02}(p) \right| / \sqrt{r_{00}(p)r_{22}(p)} > Thre$$

und

$$\left| r_{13}(p) \right| / \sqrt{r_{11}(p)r_{33}(p)} > Thre \; ,$$

wobei Thre die Schwelle repräsentiert.

**19.** Kommunikationsverfahren nach Anspruch 18, wobei das Bestimmen eines Differenzwerts zwischen einer ersten Phase und einer zweiten Phase gemäß der räumlichen Vollband-Korrelationsmatrix Folgendes umfasst:
Bestimmen eines Differenzwerts $\Delta(p)$ zwischen der ersten Phase und der zweiten Phase, wenn das Aufwärtsstrecken-Sondierungssignal von dem UE zum p-ten Mal empfangen wird, gemäß der folgenden Gleichung:

$$\Delta(p) = phase(r_{20}(p)) - phase(r_{31}(p))$$

wobei $phase(r_{20}(p))$ die erste Phase repräsentiert, und $phase(r_{31}(p))$ die zweite Phase repräsentiert und wobei
das Filtern des Differenzwerts zwischen der ersten Phase und der zweiten Phase, um die Kabelkompensationsphase zu erhalten, Folgendes umfasst:
Erhalten einer Kabelkompensationsphase $\hat{\Delta}(p)$, wenn das Aufwärtsstrecken-Sondierungssignal von dem UE zum p-ten Mal empfangen wird, wenn p größer als 1 ist, gemäß der folgenden Gleichung:

$$\hat{\Delta}(p) = (1 - \alpha) * \hat{\Delta}(p-1) + \alpha * \Delta(p)$$

wobei $\hat{\Delta}(p-1)$ eine Kabelkompensationsphase, wenn das Aufwärtsstrecken-Sondierungssignal von dem UE ein (p-1)-tes Mal empfangen wird, repräsentiert und $\alpha$ einen Filterungskoeffizienten repräsentiert; und
wenn p 1 ist, erhalten einer Kabelkompensationsphase $\Delta(1)$, wenn das Aufwärtsstrecken-Sondierungssignal von dem UE ein erstes Mal empfangen wird, gemäß der folgenden Gleichung: $\hat{\Delta}(1) = \Delta(1)$.

**20.** Kommunikationsverfahren nach einem der Ansprüche 13 bis 19, wobei m 2 ist; und wobei
das Erzeugen von 4 Kanälen von Basisbandsignalen gemäß m Kanälen von Signalen, die den m logischen Ports entsprechen, Folgendes umfasst:
Erzeugen der 4 Kanäle von Basisbandsignalen gemäß der folgenden Gleichung:

$$\begin{bmatrix} x_0(k) \\ x_1(k) \\ x_2(k) \\ x_3(k) \end{bmatrix} = \begin{bmatrix} 1 & 0 \\ e^{j2\pi dk/N_{fft}} & 0 \\ 0 & 1 \\ 0 & -e^{j2\pi dk/N_{fft}} \end{bmatrix} \begin{bmatrix} s_0(k) \\ s_1(k) \end{bmatrix}$$

wobei k einen Subträgerindex repräsentiert, $x_0(k)$, $x_1(k)$, $x_2(k)$ und $x_3(k)$ 4 Kanäle von Basisbandsignalen auf einem k-ten Subträger repräsentieren, $s_0(k)$ und $s_1(k)$ Signale repräsentieren, die jeweils 2 logischen Ports auf dem k-ten Subträger entsprechen, d die Anzahl zyklischer Verzögerungspunkte repräsentiert, $N_m$ die Anzahl

von Punkten der schnellen Fouriertransformation FFT des Systems repräsentiert und k eine positive ganze Zahl ist; und

$x_0(k)$ und $x_2(k)$ der ersten Gruppe kopolarisierter Antennen entsprechen und $x_1(k)$ und $x_3(k)$ der zweiten Gruppe kopolarisierter Antennen entsprechen.

21. Kommunikationsverfahren nach einem der Ansprüche 13 bis 19, wobei m 4 ist; und wobei

das Erzeugen von 4 Kanälen von Basisbandsignalen gemäß m Kanälen von Signalen, die den m logischen Ports entsprechen, Folgendes umfasst:

Erzeugen eines ersten Kanals des Basisbandsignals gemäß einem Signal, das einem ersten logischen Port entspricht, Erzeugen eines zweiten Kanals des Basisbandsignals gemäß einem Signal, das einem dritten logischen Port entspricht, Erzeugen eines dritten Kanals des Basisbandsignals gemäß einem Signal, das einem zweiten logischen Port entspricht, und Erzeugen eines vierten Kanals des Basisbandsignals gemäß einem Signal, das einem vierten logischen Port entspricht.

22. Kommunikationsverfahren nach Anspruch 21, wobei das Erzeugen eines ersten Kanals des Basisbandsignals gemäß einem Signal, das einem ersten logischen Port entspricht, das Erzeugen eines zweiten Kanals des Basisbandsignals gemäß einem Signal, das einem dritten logischen Port entspricht, das Erzeugen eines dritten Kanals des Basisbandsignals gemäß einem Signal, das einem zweiten logischen Port entspricht und das, Erzeugen eines vierten Kanals des Basisbandsignals gemäß einem Signal, das einem vierten logischen Port entspricht

Folgendes umfasst:

Erzeugen der 4 Kanäle von Basisbandsignalen gemäß der folgenden Gleichung:

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix}$$

wobei k einen Subträgerindex repräsentiert, $x_0(k)$, $x_1(k)$, $x_2(k)$ und $x_3(k)$ 4 Kanäle von Basisbandsignalen auf einem k-ten Subträger repräsentieren, $s_0(k)$, $s_1(k)$, $s_2(k)$ und $s_3(k)$ Signale repräsentieren, die jeweils 4 logischen Ports auf dem k-ten Subträger entsprechen, und k eine positive ganze Zahl ist; und

$x_0(k)$ und $x_2(k)$ der ersten Gruppe kopolarisierter Antennen entsprechen und $x_1(k)$ und $x_3(k)$ der zweiten Gruppe kopolarisierter Antennen entsprechen.

**Revendications**

1. Unité de bande de base (211) destinée à être utilisée dans un dispositif de communication comprenant l'unité de bande de base, unité (212) à fréquence intermédiaire / radiofréquence, IF/RF, et antennes à polarisation croisée à deux colonnes (213), l'unité IF/RF étant connectée aux antennes à polarisation croisée à deux colonnes par l'intermédiaire de câbles, l'unité IF/RF comprenant 4 canaux d'émission, et les antennes à polarisation croisée à double colonne comprenant un premier groupe d'antennes co-polarisées et un second groupe d'antennes co-polarisées, le premier groupe d'antennes co-polarisées ayant une polarisation différente du second groupe d'antennes co-polarisées ;

l'unité de bande de base étant configurée pour :

déterminer des coefficients de compensation correspondant respectivement aux 4 canaux d'émission ;
déterminer une phase de compensation de câble en fonction d'un signal de détection en liaison montante reçu en provenance d'un équipement utilisateur UE (220), la phase de compensation de câble étant une différence entre une différence de phase de câble correspondant au premier groupe d'antennes co-polarisées et une différence de phase de câble correspondant au second groupe d'antennes co-polarisées, où ;

générer 4 canaux de signaux de bande de base selon m canaux de signaux qui sont en une correspondance biunivoque avec m ports logiques, m étant un nombre entier positif ;

corriger les 4 canaux de signaux de bande de base en fonction des coefficients de compensation et de la phase de compensation de câble ;

envoyer les 4 canaux de signaux de bande de base corrigés à l'UE par l'intermédiaire des 4 canaux d'émission et des antennes à polarisation croisée à double colonne.

2. Unité de bande de base (211) selon la revendication 1, l'unité de bande de base étant configurée pour déterminer une phase de compensation de câble en fonction d'un signal de détection en liaison montante reçu en provenance d'un équipement utilisateur UE comprenant le fait que :
l'unité de bande de base est configurée pour :

déterminer des réponses de canal entre l'UE et l'unité de bande de base en fonction du signal de détection en liaison montante reçu en provenance de l'UE ;

déterminer, en fonction des réponses de canal entre l'UE et l'unité de bande de base, que les canaux entre l'UE et les antennes à polarisation croisée à deux colonnes sont des chemins de lignes de visée, LOS ; et

déterminer la phase de compensation de câble en fonction des réponses de canal entre l'UE et l'unité de bande de base.

3. Unité de bande de base (211) selon la revendication 2, le fait que l'unité de bande de base est configurée pour déterminer, en fonction des réponses de canal entre l'UE et l'unité de bande de base, que des canaux entre l'UE et les antennes à polarisation croisée à deux colonnes sont des chemins LOS comprenant le fait que :
l'unité de bande de base est configurée pour :

déterminer une matrice de corrélation spatiale à bande complète selon les réponses de canal entre l'UE et l'unité de bande de base ; et

déterminer, en fonction de la matrice de corrélation spatiale à bande complète, que les canaux entre l'UE et les antennes à polarisation croisée à deux colonnes sont des chemins LOS.

4. Unité de bande de base (211) selon la revendication 3, dans laquelle le premier groupe d'antennes co-polarisées comprend une première antenne et une troisième antenne, le second groupe d'antennes co-polarisées comprend une deuxième antenne et une quatrième antenne, des canaux entre l'UE et l'unité de bande de base comprennent un premier canal, un deuxième canal, un troisième canal et un quatrième canal, la première antenne correspond au premier canal, la deuxième antenne correspond au deuxième canal, la troisième antenne correspond au troisième canal, et la quatrième antenne correspond au quatrième canal ; et
dans laquelle
le fait que l'unité de bande de base est configurée pour déterminer, en fonction de la matrice de corrélation spatiale à bande complète, que les canaux entre l'UE et les antennes à polarisation croisée à deux colonnes sont des chemins LOS comprenant le fait que :
l'unité de bande de base est configurée pour :
déterminer, si une corrélation entre le premier canal et le troisième canal est supérieure à un seuil prédéfini, et si une corrélation entre le deuxième canal et le quatrième canal est supérieure au seuil, que les canaux entre l'UE et les antennes à polarisation croisée à deux colonnes sont des chemins LOS.

5. Unité de bande de base (211) selon la revendication 4, le fait que l'unité de bande de base est configurée pour déterminer la phase de compensation de câble en fonction des réponses de canal entre l'UE et l'unité de bande de base comprenant le fait que :
l'unité de bande de base est configurée pour :

déterminer une valeur de différence entre une première phase et une seconde phase selon la matrice de corrélation spatiale à bande complète, la première phase étant une différence de phase entre le premier canal et le troisième canal, et la seconde phase étant une différence de phase entre le deuxième canal et le quatrième canal ; et

filtrer la valeur de différence entre la première phase et la seconde phase, pour obtenir la phase de compensation de câble.

6. Unité de bande de base (211) selon la revendication 5, dans laquelle lorsque l'unité de bande de base reçoit le signal de détection en liaison montante provenant de l'UE pour une p$^{\text{ème}}$ fois, la matrice de corrélation spatiale à

bande complète

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix},$$

dans laquelle un élément $r_{ij}(p)$ dans $R(p)$ représente une corrélation entre un i$^{\text{ème}}$ canal et un j$^{\text{ème}}$ canal entre l'UE et l'unité de bande de base lorsque l'unité de bande de base reçoit le signal de détection en liaison montante provenant de l'UE pour la p$^{\text{ème}}$ fois, et p est un nombre entier positif ; et

le fait que l'unité de bande de base est configurée pour déterminer, si une corrélation entre le premier canal et le troisième canal est supérieure à un seuil prédéfini, et si une corrélation entre le deuxième canal et le quatrième canal est supérieure au seuil, que les canaux entre l'UE et les antennes à polarisation croisée à deux colonnes sont des chemins LOS, comprenant le fait que :

l'unité de bande de base est configurée pour :

déterminer, si les inéquations suivantes sont toutes deux vraies, que les canaux entre l'UE et les antennes à polarisation croisée à double colonne, lorsque le signal de détection en liaison montante provenant de l'UE est reçu pour la p$^{\text{ème}}$ fois, sont des chemins LOS :

$$|r_{02}(p)|/\sqrt{r_{00}(p)r_{22}(p)} > Thre \text{ et } |r_{13}(p)|/\sqrt{r_{11}(p)r_{33}(p)} > Thre$$

Thre représentant le seuil.

7. Unité de bande de base (211) selon la revendication 6, dans laquelle le fait que l'unité de bande de base est configurée pour déterminer une valeur de différence entre une première phase et une seconde phase selon la matrice de corrélation spatiale à bande complète comprend le fait que :

l'unité de bande de base est configurée pour :

déterminer, selon l'équation suivante, une valeur de différence $\Delta(p)$ entre la première phase et la seconde phase lorsque le signal de détection en liaison montante provenant de l'UE est reçu pour la p$^{\text{ème}}$ fois :

$$\Delta(p) = phase(\mathrm{r}_{20}(p)) - phase(\mathrm{r}_{31}(p))$$

$phase(r_{20}(p))$ représentant la première phase et $phase(r_{31}(p))$ représentant la seconde phase, et p représentant un nombre entier positif ; et

le fait que l'unité de bande de base est configurée pour filtrer la valeur de différence entre la première phase et la seconde phase, pour obtenir la phase de compensation de câble, comprenant le fait que :

l'unité de bande de base est configurée pour :

lorsque p est supérieur à 1, obtenir, selon l'équation suivante, une phase de compensation de câble $\hat{\Delta}(p)$ lorsque le signal de détection en liaison montante provenant de l'UE est reçu pour la p$^{\text{ème}}$ fois :

$$\hat{\Delta}(p) = (1 - \alpha) * \hat{\Delta}(p - 1) + \alpha * \Delta(p)$$

$\hat{\Delta}(p - 1)$ représentant une phase de compensation de câble lorsque le signal de détection en liaison montante provenant de l'UE est reçu pour une (p-1)$^{\text{ème}}$ fois et $\alpha$ représentant un coefficient de filtrage ; et

lorsque p est 1, obtenir, selon l'équation suivante, une phase de compensation de câble $\hat{\Delta}(1)$ lorsque le signal de détection en liaison montante provenant de l'UE est reçu pour une première fois :

$$\hat{\Delta}(1) = \Delta(1).$$

8. Unité de bande de base (211) selon l'une quelconque des revendications 1 à 7, dans laquelle m est 2 ; et dans laquelle le fait que l'unité de bande de base est configurée pour générer 4 canaux de signaux de bande de base selon m canaux de signaux correspondant aux m ports logiques comprend le fait que :

l'unité de bande de base est configurée pour générer les 4 canaux de signaux de bande de base selon l'équation suivante :

$$\begin{bmatrix} x_0(k) \\ x_1(k) \\ x_2(k) \\ x_3(k) \end{bmatrix} = \begin{bmatrix} 1 & 0 \\ e^{\frac{j2\pi dk}{N_{fft}}} & 0 \\ 0 & 1 \\ 0 & -e^{\frac{j2\pi dk}{N_{fft}}} \end{bmatrix} \begin{bmatrix} s_0(k) \\ s_1(k) \end{bmatrix}$$

dans laquelle k représente un indice de sous-porteuse, $x_0(k)$, $x_1(k)$, $x_2(k)$ et $x_3(k)$ représentent 4 canaux de signaux de bande de base sur une $k^{\text{ème}}$ sous-porteuse, $S_0(k)$ et $S_1(k)$ représentent des signaux correspondant respectivement à 2 ports logiques sur la $k^{\text{ème}}$ sous-porteuse, d représente le nombre de points de retard cycliques, $N_{fft}$ représente le nombre de points FFT de transformation de Fourier rapide de système, et k est un nombre entier positif ; et

$x_0(k)$ et $x_2(k)$ correspondent au premier groupe d'antennes co-polarisées, et $x_1(k)$ et $x_3(k)$ correspondent au second groupe d'antennes co-polarisées.

9. Unité de bande de base (211) selon l'une quelconque des revendications 1 à 7, dans laquelle m est 4 ; et dans laquelle le fait que l'unité de bande de base est configurée pour générer 4 canaux de signaux de bande de base selon m canaux de signaux correspondant aux m ports logiques comprend le fait que :

l'unité de bande de base est configurée pour : générer un premier canal de signal de bande de base en fonction d'un signal correspondant à un premier port logique, générer un deuxième canal de signal de bande de base en fonction d'un signal correspondant à un troisième port logique, générer un troisième canal de signal de bande de base en fonction d'un signal correspondant à un deuxième port logique, et générer un quatrième canal de signal de bande de base en fonction d'un signal correspondant à un quatrième port logique.

10. Unité de bande de base (211) selon la revendication 9, le fait que l'unité de bande de base est configurée pour générer un premier canal de signal de bande de base en fonction d'un signal correspondant à un premier port logique, générer un deuxième canal de signal de bande de base en fonction d'un signal correspondant à un troisième port logique, générer un troisième canal de signal de bande de base en fonction d'un signal correspondant à un deuxième port logique, et générer un quatrième canal de signal de bande de base en fonction d'un signal correspondant à un quatrième port logique comprenant le fait que :

l'unité de bande de base est configurée pour :

générer les 4 canaux de signaux de bande de base selon l'équation suivante :

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix}$$

dans laquelle k représente un indice de sous-porteuse, $x_0(k)$, $x_1(k)$, $x_2(k)$ et $x_3(k)$ représentent 4 canaux de signaux de bande de base sur une $k^{\text{eme}}$ sous-porteuse, $S_0(k)$, $S_1(k)$, $S_2(k)$ et $S_3(k)$ représentent des signaux correspondant respectivement à 4 ports logiques sur la $k^{\text{eme}}$ sous-porteuse, et k représente un nombre entier positif ; et

$x_0(k)$ et $x_2(k)$ correspondent au premier groupe d'antennes co-polarisées, et $x_1(k)$ et $x_3(k)$ correspondent au second groupe d'antennes co-polarisées.

11. Dispositif de communication (210) comprenant une unité de bande de base (211) selon l'une quelconque des revendications 1 à 10, une unité à fréquence intermédiaire / radiofréquence, IF/RF (212), et des antennes à polarisation croisée à deux colonnes (213), dans lequel l'unité de bande de base est connectée à l'unité IF/RF par l'intermédiaire d'une fibre optique, l'unité IF/RF est connectée aux antennes à polarisation croisée à deux colonnes par l'intermédiaire de câbles, l'unité IF/RF comprend 4 canaux d'émission, les antennes à polarisation croisée à deux colonnes comprennent un premier groupe d'antennes co-polarisées et un second groupe d'antennes co-polarisées, et le dispositif de communication est configuré pour fonctionner dans un mode dans lequel il existe les m ports logiques.

**12.** Dispositif de communication (210) selon la revendication 11, dans lequel le dispositif de communication est une station de base.

**13.** Procédé de communication destiné à être utilisé dans une station de base, la station de base comprenant une unité de bande de base, une unité à fréquence intermédiaire / radiofréquence IF/RF, et des antennes à polarisation croisée à deux colonnes, l'unité de bande de base étant connectée à l'unité IF/RF par l'intermédiaire d'une fibre optique, l'unité IF/RF étant connectée aux antennes à polarisation croisée à deux colonnes par l'intermédiaire de câbles, l'unité IF/RF comprenant 4 canaux d'émission, les antennes à polarisation croisée à deux colonnes comprenant un premier groupe d'antennes co-polarisées et un second groupe d'antennes co-polarisées, le premier groupe d'antennes co-polarisées ayant une polarisation différente du second groupe d'antennes co-polarisées, et le procédé de communication fonctionnant dans un mode dans lequel il y a m ports logiques, m étant un nombre entier positif, le procédé de communication comprenant :

la détermination (110) de coefficients de compensation correspondant respectivement aux 4 canaux d'émission ;
la détermination (120) d'une phase de compensation de câble en fonction d'un signal de détection en liaison montante reçu en provenance d'un équipement utilisateur (UE), la phase de compensation de câble étant une différence entre une différence de phase de câble correspondant au premier groupe d'antennes co-polarisées et une différence de phase de câble correspondant au second groupe d'antennes co-polarisées ;
la génération (130) de 4 canaux de signaux de bande de base selon m canaux de signaux qui sont dans une correspondance biunivoque avec les m ports logiques ; et
la correction (140) des 4 canaux de signaux de bande de base en fonction des coefficients de compensation et de la phase de compensation de câble ;
l'envoi des 4 canaux de signaux de bande de base corrigés à l'UE par l'intermédiaire des 4 canaux d'émission et des antennes à polarisation croisée à double colonne.

**14.** Procédé de communication selon la revendication 13, la détermination d'une phase de compensation de câble en fonction d'un signal de détection en liaison montante reçu en provenance d'un UE comprenant :

la détermination de réponses de canal entre l'UE et la station de base selon le signal de détection en liaison montante reçu en provenance de l'UE ;
la détermination, en fonction des réponses de canal entre l'UE et la station de base, que des canaux entre l'UE et les antennes à polarisation croisée à deux colonnes sont des chemins de ligne de visée, LOS ; et
la détermination de la phase de compensation de câble selon les réponses de canal entre l'UE et la station de base.

**15.** Procédé de communication selon la revendication 14, dans lequel la détermination, selon les réponses de canal entre l'UE et la station de base, que des canaux entre l'UE et les antennes à polarisation croisée à deux colonnes sont des chemins LOS comprend :

la détermination d'une matrice de corrélation spatiale à bande complète selon les réponses de canal entre l'UE et la station de base ; et
la détermination, selon la matrice de corrélation spatiale à bande complète, que les canaux entre l'UE et les antennes à polarisation croisée à deux colonnes sont des chemins LOS.

**16.** Procédé de communication selon la revendication 15, dans lequel le premier groupe d'antennes co-polarisées comprend une première antenne et une troisième antenne, le second groupe d'antennes co-polarisées comprend une deuxième antenne et une quatrième antenne, des canaux entre l'UE et la station de base comprennent un premier canal, un deuxième canal, un troisième canal et un quatrième canal, la première antenne correspond au premier canal, la deuxième antenne correspond au deuxième canal, la troisième antenne correspond au troisième canal, et la quatrième antenne correspond au quatrième canal ; et
dans lequel la détermination, selon la matrice de corrélation spatiale à bande complète, que le canal entre l'UE et les antennes à polarisation croisée à deux colonnes sont des chemins LOS comprend :
la détermination, si une corrélation entre le premier canal et le troisième canal est supérieure à un seuil prédéfini, et si une corrélation entre le deuxième canal et le quatrième canal est supérieure au seuil, que les canaux entre l'UE et les antennes à polarisation croisée à deux colonnes sont des chemins LOS.

**17.** Procédé de communication selon la revendication 16, la détermination de la phase de compensation de câble en fonction des réponses de canal entre l'UE et la station de base comprenant :

la détermination d'une valeur de différence entre une première phase et une seconde phase selon la matrice de corrélation spatiale à bande complète, la première phase étant une différence de phase entre le premier canal et le troisième canal, et la seconde phase étant une différence de phase entre le deuxième canal et le quatrième canal ; et
le filtrage de la valeur de différence entre la première phase et la seconde phase, pour obtenir la phase de compensation de câble.

**18.** Procédé de communication selon la revendication 17, dans lequel, lorsque le signal de détection en liaison montante provenant de l'UE est reçu pour une $p^{ème}$ fois,
la matrice de corrélation spatiale à bande complète :

$$R(p) = \begin{bmatrix} r_{00}(p) & r_{01}(p) & r_{02}(p) & r_{03}(p) \\ r_{10}(p) & r_{11}(p) & r_{12}(p) & r_{13}(p) \\ r_{20}(p) & r_{21}(p) & r_{22}(p) & r_{23}(p) \\ r_{30}(p) & r_{31}(p) & r_{32}(p) & r_{33}(p) \end{bmatrix}$$

dans laquelle un élément $r_{ij}(p)$ dans $R(p)$ représente une corrélation entre un $i^{ème}$ canal et un $j^{ème}$ canal entre l'UE et la station de base lorsque le signal de détection en liaison montante en provenance de l'UE est reçu pour la $p^{ème}$ fois, et p est un nombre entier positif ; et
la détermination, si une corrélation entre le premier canal et le troisième canal est supérieure à un seuil prédéfini, et si une corrélation entre le deuxième canal et le quatrième canal est supérieure au seuil, que les canaux entre l'UE et les antennes à polarisation croisée à deux colonnes sont des chemins LOS, comprenant :
la détermination, si les inéquations suivantes sont toutes deux vraies, que les canaux entre l'UE et les antennes à polarisation croisée à double colonne, lorsque le signal de détection en liaison montante provenant de l'UE est reçu pour la $p^{ème}$ fois, sont des chemins LOS :

$$|r_{02}(p)|/\sqrt{r_{00}(p)r_{22}(p)} > Thre \text{ et } |r_{13}(p)|/\sqrt{r_{11}(p)r_{33}(p)} > Thre$$

Thre représentant le seuil.

**19.** Procédé de communication selon la revendication 18, dans lequel la détermination d'une valeur de différence entre une première phase et une seconde phase selon la matrice de corrélation spatiale à bande complète comprend :
la détermination, selon l'équation suivante, d'une valeur de différence $\Delta(p)$ entre la première phase et la seconde phase lorsque le signal de détection en liaison montante provenant de l'UE est reçu pour la $p^{ème}$ fois :

$$\Delta(p) = phase(r_{20}(p)) - phase(r_{31}(p))$$

$phase(r_{20}(p))$ représentant la première phase, et $phase(r_{31}(p))$ représentant la seconde phase ; et le filtrage de la valeur de différence entre la première phase et la seconde phase, pour obtenir la phase de compensation de câble comprenant :
lorsque p est supérieur à 1, l'obtention, selon l'équation suivante, d'une phase de compensation de câble $\hat{\Delta}(p)$ lorsque le signal de détection en liaison montante provenant de l'UE est reçu pour la $p^{ème}$ fois :

$$\hat{\Delta}(p) = (1 - \alpha) * \hat{\Delta}(p - 1) + \alpha * \Delta(p)$$

$\hat{\Delta}(p - 1)$ représentant une phase de compensation de câble lorsque le signal de détection en liaison montante provenant de l'UE est reçu pour une $(p-1)^{ème}$ fois, et $\alpha$ représentant un coefficient de filtrage ; et
lorsque p est 1, l'obtention, selon l'équation suivante, d'une phase de compensation de câble $\hat{\Delta}(1)$ lorsque le signal de détection en liaison montante provenant de l'UE est reçu pour une première fois :

$$\widehat{\Delta}(1) = \Delta(1).$$

**20.** Procédé de communication selon l'une quelconque des revendications 13 à 19, dans lequel m est 2 ; et dans lequel la génération de 4 canaux de signaux de bande de base selon m canaux de signaux correspondant à m ports logiques comprend :

la génération des 4 canaux de signaux de bande de base selon l'équation suivante :

$$\begin{bmatrix} x_0(k) \\ x_1(k) \\ x_2(k) \\ x_3(k) \end{bmatrix} = \begin{bmatrix} 1 & 0 \\ e^{\frac{j2\pi dk}{N_{fft}}} & 0 \\ 0 & 1 \\ 0 & -e^{\frac{j2\pi dk}{N_{fft}}} \end{bmatrix} \begin{bmatrix} s_0(k) \\ s_1(k) \end{bmatrix}$$

dans laquelle k représente un indice de sous-porteuse, $x_0(k)$, $x_1(k)$, $x_2(k)$ et $x_3(k)$ représentent 4 canaux de signaux de bande de base sur une $k^{eme}$ sous-porteuse, $S_0(k)$ et $S_1(k)$ représentent des signaux correspondant respectivement à 2 ports logiques sur la $k^{eme}$ sous-porteuse, d représente le nombre de points de retard cycliques, $N_{fft}$ représente le nombre de points FFT de transformation de Fourier rapide de système, et k est un nombre entier positif ; et

$x_0(k)$ et $x_2(k)$ correspondent au premier groupe d'antennes co-polarisées, et $x_1(k)$ et $x_3(k)$ correspondent au second groupe d'antennes co-polarisées.

**21.** Procédé de communication selon l'une quelconque des revendications 13 à 19, dans lequel m est 4 ; et dans lequel la génération des 4 canaux de signaux de bande de base selon m canaux de signaux correspondant à m ports logiques comprend :

la génération d'un premier canal de signal de bande de base en fonction d'un signal correspondant à un premier port logique, la génération d'un deuxième canal de signal de bande de base en fonction d'un signal correspondant à un troisième port logique, la génération d'un troisième canal de signal de bande de base en fonction d'un signal correspondant à un deuxième port logique, et la génération d'un quatrième canal de signal de bande de base en fonction d'un signal correspondant à un quatrième port logique.

**22.** Procédé de communication selon la revendication 21, dans lequel la génération d'un premier canal de signal de bande de base en fonction d'un signal correspondant à un premier port logique, la génération d'un second canal de signal de bande de base en fonction d'un signal correspondant à un troisième port logique, la génération d'un troisième canal de signal de bande de base en fonction d'un signal correspondant à un second port logique, et la génération d'un quatrième canal de signal de bande de base en fonction d'un signal correspondant à un quatrième port logique comprend :

la génération des 4 canaux de signaux de bande de base selon l'équation suivante :

$$\begin{bmatrix} x_0(k) \\ x_1(k) \\ x_2(k) \\ x_3(k) \end{bmatrix} = \begin{bmatrix} 1 & 0 & 0 & 0 \\ 0 & 0 & 1 & 0 \\ 0 & 1 & 0 & 0 \\ 0 & 0 & 0 & 1 \end{bmatrix} \begin{bmatrix} s_0(k) \\ s_1(k) \\ s_2(k) \\ s_3(k) \end{bmatrix}$$

dans laquelle k représente un indice de sous-porteuse, $x_0(k)$, $x_1(k)$, $x_2(k)$ et $x_3(k)$ représentent 4 canaux de signaux de bande de base sur une $k^{eme}$ sous-porteuse, $S_0(k)$, $S_1(k)$, $S_2(k)$ et $S_3(k)$ représentent des signaux correspondant respectivement à 4 ports logiques sur la $k^{eme}$ sous-porteuse, et k représente un nombre entier positif ; et

$x_0(k)$ et $x_2(k)$ correspondent au premier groupe d'antennes co-polarisées, et $x_1(k)$ et $x_3(k)$ correspondent au second groupe d'antennes co-polarisées.

Determine compensation coefficients respectively corresponding to 4 transmit channels ⟶ 110

Determine a cable compensation phase according to an uplink sounding signal received from a UE ⟶ 120

Generate 4 channels of baseband signals according to m channels of signals which are in a one-to-one correspondence with m logical ports ⟶ 130

Correct the 4 channels of baseband signals according to the compensation coefficients respectively corresponding to the 4 transmit channels and the cable compensation phase ⟶ 140

FIG. 1

FIG. 2

Double-columns cross polarization antennas 213

First column of positive 45-degree polarization antenna

First column of negative 45-degree polarization antenna

Second column of positive 45-degree polarization antenna

Second column of negative 45-degree polarization antenna

RRU 212

Transmit channel 0

Transmit channel 1

Transmit channel 2

Transmit channel 3

Correcting

BBU 211

antennas mapping

$x_0(k)$

$x_1(k)$

$x_2(k)$

$x_3(k)$

$s_0(k)$

$s_1(k)$

MIMO encoding

FIG. 3

BBU 211

RRU 212

Dual-columns cross polarization antennas 213

MIMO encoding

$s_0(k)$

$s_1(k)$

$s_2(k)$

$s_3(k)$

Antenna mapping

$x_0(k)$

$x_1(k)$

$x_2(k)$

$x_3(k)$

Correcting

Transmit channel 0

Transmit channel 1

Transmit channel 2

Transmit channel 3

First column of positive 45-degree polarization antenna

First column of negative 45-degree polarization antenna

Second column of positive 45-degree polarization antenna

Second column of negative 45-degree polarization antenna

FIG. 4

| Determining unit 510 | Generating unit 520 | Correcting unit 530 | 500 |

FIG. 5

Processor 620

Data bus 630

600

Memory 610

FIG. 6

| Baseband unit 710 | IF/RF unit 720 | Dual-columns cross polarization antennas 730 | 700 |

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070205955 A